# EUROPÄISCHE PATENTSCHRIFT

(11) **EP 2 057 233 B1**
(45) Veröffentlichungstag und Bekanntmachung des Hinweises auf die Patenterteilung: **11.06.2014**
(21) Anmeldenummer: 07801881.9
(22) Anmeldetag: 24.08.2007
(51) Int. Cl.: C08L 75/08, C08G 18/76, C08G 18/72, C08G 18/48, C08K 5/00, C08K 5/10, C08K 3/00, C08J 9/02

(54) **NEUARTIGE HOCH WASSERHALTIGE POLYURETHANE, VERFAHREN ZU IHRER HERSTELLUNG UND ANWENDUNG**
NOVEL POLYURETHANES OF HIGH WATER CONTENT, PROCESSES FOR THEIR PREPARATION AND USE
NOUVEAU POLYURÉTHANNE À TENEUR ÉLEVÉE EN EAU, SON PROCÉDÉ DE FABRICATION ET SON UTILISATION

(30) Priorität: 25.08.2006 DE 102006039901
(43) Veröffentlichungstag der Anmeldung: 13.05.2009
(73) Patentinhaber: Marquardt, Renate, 04463 Grosspösna (DE); Petry, Frauke, 04654 Frohburg-Tautenhain (DE)
(72) Erfinder: Marquardt, Renate, 04463 Grosspösna (DE); Petry, Frauke, 04654 Frohburg-Tautenhain (DE)
(86) Internationale Anmeldenummer: PCT/EP2007/007454
(87) Internationale Veröffentlichungsnummer: WO 2008/022798

(56) Entgegenhaltungen:
- EP-A- 0 151 937
- EP-A1- 1 234 574
- EP-A1- 1 637 188
- EP-A2- 1 008 616
- WO-A-2006/069742
- AT-B- 242 831
- DE-A1- 2 348 236
- DE-A1- 2 701 004
- DE-A1- 2 725 764
- DE-C1- 19 601 058
- US-A- 3 138 524
- US-A- 3 371 666
- US-A- 3 597 371
- US-A- 4 221 596
- US-A- 4 423 118

## Beschreibung

Gegenstand der Erfindung sind hoch wasserhaltige Polyurethanmassen mit Elastomer- oder zelligem Charakter für breite Anwendungsbereiche sowie ein Verfahren zu ihrer Herstellung.

Üblicherweise enthalten Polyurethan-Formulierungen gar kein Wasser oder wegen der ungünstigen Äquivalenzbeziehung zu den Isocyanaten nur stöchiometrische Wasseranteile, d.h. maximal 1 Gew.-% bei Elastomerformulierungen und maximal 3 Gew.-% bei wassergetriebenen Schäumen.

So werden z.B. nach US 4 683 929 und US 4 416 844 aus den üblichen Polyurethan-Einsatzstoffen, wie Polyetherpolyolen, aromatischen Diisocyanaten und Kettenverlängerern sowie ölhaltigen Füllstoffen, in Gegenwart eines Katalysators bei Verwendung von bis zu 0,6 Gew.-% Wasser, bezogen auf die Gesamtmasse der Komponente A, kompakte blasenfreie Polyurethan-Reifenfüllmassen erzeugt, wobei das als Nebenprodukt entstandene Kohlendioxid einerseits im ölgefüllten Polyurethan gelöst und andererseits in anorganische Carbonate umgewandelt wird.

Gemäß DE 40 38 996 wird maximal 1 Gew.-% Wasser, bezogen auf die Gesamtmasse der Komponente A, gezielt zur Bildung von Hartsegmenten in ölgefüllten, hohlraumfreien Reifenfüllmassen eingesetzt. Das dabei als Nebenprodukt entstehende Kohlendioxid wird mit Hilfe einer speziellen Verarbeitungstechnologie in der Elastomermasse so fein verteilt, dass für das bloße Auge keine Gasblasen sichtbar sind.

Hoch wasserhaltige Polyurethan-Formulierungen enthalten dagegen überäquivalente Wassermengen, was zunächst ein Widerspruch in Bezug auf die Polyurethan-Stöchiometrie zu sein scheint. Tatsächlich ist der Einsatz überäquivalenter Wassermengen nur möglich, wenn es gelingt, das Wasser latent zu maskieren und auf diese Weise der Reaktion mit dem Isocyanat der Komponente B zeitweise zu entziehen und diesem anschließend nur zu einem geringen, dem stöchiometrisch erforderlichen, Teil zuzuführen.

Die Verwendung überproportionaler Wassermengen, bezogen auf das eingesetzte Isocyanat, wurde schon mehrfach mit unterschiedlichen Verfahren untersucht und praktiziert, wobei das Ziel vorwiegend in der Bildung von Polyharnstoff-Strukturen oder aus anorganischem Material bestehenden Schaumgebilden besteht.

So wird gemäß DE 29 08 746 C2 in Wasserglas gebundenes Wasser mit Isocyanat zu Polyharnstoffen umgesetzt, die als starre Verfüllmassen für den Bergbau dienen können. Nach EP 0 151 937 B1 und DE 35 26 185 A1 werden Schaumstoffabfälle bzw. Torf- und Kohlemassen mit Polyharnstoffen zu Klärmassen für Abwässer verarbeitet. Gemäß US 3 812 619 A werden Polyharnstoff-Schäume als Anzuchtsubstrat mit integriertem Saatgut und Düngemittel für den Gartenbau erzeugt.

Auch gemäß DE 23 19 706 C2 werden überäquivalente Wassermengen angewendet, jedoch mit einer anderen Zielstellung und Wirkung als es bei der vorliegenden Erfindung der Fall ist. Das Wasser dient in diesem Fall nahezu ausschließlich als Kohlendioxidquelle, um die außerdem eingesetzten, überproportional hohen Feststoffmengen zu einer Schaumstruktur aufblähen zu können. Das Zielprodukt ist daher eher ein aufgeschäumtes anorganisches Material als ein Polymer und die resultierende Polymermatrix enthält daher kaum noch eingeschlossenes Wasser.

Analog beschreibt DE 27 01 004 A1 die Verwendung überproportionaler Wassermengen, um hohe Feststoffanteile in eine Schaumstruktur eintragen zu können. Wie bei der Schrift DE 23 19 706 C2 dient das Wasser hier ebenfalls als Treibmittel zur Kohlendioxiderzeugung und nicht als integrierter Bestandteil der Polymermatrix. Die in dieser Schrift hervorgehobene Brandresistenz ist auf eine Kombination anorganischer Feststoffe mit den klassischen Chlor und/oder Phosphor enthaltenden Flammschutzmitteln zurückzuführen, nicht aber auf die Wirkung eingelagerten Wassers.

In DE 33 31 630 wird z.B. ein gegen Gasverlust sicherer Fahrzeugreifen beschrieben, der eine kompakte Polyurethan-Füllmasse mit einem hohen Wasseranteil enthält. Allerdings weist das Verfahren zu ihrer Herstellung durch die unzureichende Berücksichtigung physikalischer Gegebenheiten erhebliche Mängel auf, so dass die Reproduzierbarkeit der Polyurethanreaktion zwischen der wasserhaltigen Komponente A und der organischen Komponente B nicht gewährleistet ist.

Nach DE 196 01 058 erhält man eine kompakte, hoch wasserhaltige Polyurethanmasse für die Spezialanwendung Reifenfüllmassen unter Verwendung organischer Quellmittel in der Komponente A und durch gezielte Nutzung rheologischer Gesetzmäßigkeiten. Auf diese Weise werden homogene, weitgehend standfeste A-Komponenten hergestellt, die bis zu 96 Gew.-% aus Wasser bestehen und mit herkömmlichen B-Komponenten zu den gewünschten kompakten Polyurethan-Elastomeren reagieren können.

Die nach DE 196 01 058 erhaltenen kompakten Polyurethanelastomere sind ausschließlich für den speziellen Verwendungszweck als Reifenfüllmassen gedacht und daher sowohl in ihrer Zusammensetzung bezüglich der Herstellungstechnologie und der Endeigenschaften ausschließlich auf diese Anwendung abgestimmt und auch nur dafür geeignet. So unterliegen hoch wasserhaltige Polyurethanmassen außerhalb der schützenden Reifendecke einem Schrumpfprozess, indem das in die Polymermatrix eingebundene Wasser partiell bis zum Erreichen eines Gleichgewichtszustandes in die Atmosphäre diffundiert. Für den Anwendungszweck der Reifenfüllmasse ist diese nachteilige Eigenschaft nicht relevant, da die Reifendecke eine sichere Diffusionsbarriere darstellt. Dagegen ist die Schrumpfung eines wasserhaltigen Polyurethankörpers für andere Anwendungszwecke nicht hinnehmbar.

Die WO 2006/069742 beschreibt Urethanverbindungen, enthaltend ein Polyethergruppen-haltiges Silikonderivat und einen Stickstoff-Heterozyklus. Die US 3,597,371 beschreibt Polyurethanschäume, basierend auf Alkylenoxid-Addukten von Alkylen-bis-phenylen-diaminen. Die US 3,138,524 beschreibt eine pharmazeutische Zusammensetzung, enthaltend 3-Sulfoanilamido-5-methyl-isoxazol, Natriumlaurylsulfat, Dimethylpolysiloxan und Wasser. Die EP 1 234 574 A1 beschreibt ein Wachstumsmittel für Haare, welches Dimethylpolysiloxan aufweist.

Die Aufgabe der vorliegenden Erfindung ist es, die dem Stand der Technik anhaftenden Mängel und die Gebrauchswerteinschränkung für hoch wasserhaltige Polyurethanmassen zu überwinden und neuartige Formulierungen mit hohen Wassergehalten und variablen, ökologisch wertvollen Eigenschaften vorzulegen, die sich nach einem vereinfachten, industriell praktikablen Verfahren herstellen lassen.

In einem ersten Aspekt betrifft die Erfindung ein kompaktes oder zelliges, hoch wasserhaltiges Polyurethan, erhältlich durch Reaktion einer Komponente A und einer Komponente B, gegebenenfalls in Anwesenheit eines Treibmittels, wobei die Komponente A Wasser in einem Anteil von mindestens 50 Gew.-%, ein organisches Quellmittel, ein Mittel zur Verhinderung des Schrumpfens, ausgewählt aus der Gruppe bestehend aus Alkylsilanen, Aminosiloxanemulsionen und Calciumsulfoaluminaten, wie sie durch Hitzebehandlung aus Calciumoxid, Aluminiumoxid und Calciumsulfat gewonnen werden, und gegebenenfalls weitere organische oder anorganische Zusatzstoffe enthält, und wobei die Komponente B eine oder mehrere Polyhydroxyverbindungen, ein oder mehrere Polyisocyanate und/oder deren Reaktionsprodukt, einen Weichmacher und weitere organische oder anorganische Zusatzstoffe enthält, wobei der Weichmacher zu mehr als 40 Gew.-%, bezogen auf das Gesamtgewicht der Weichmacher, aus nachwachsenden Rohstoffen besteht.

Herkömmliche zellige Polyurethanformulierungen können, sofern keine Kohlenwasserstoffe oder Halogenkohlenwasserstoffe als Treibmittel verwendet werden, durch Zugabe äquivalenter Wassermengen, z. B. 1 bis 10 Gew.-%, bezogen auf die Masse der Isocyanat-reaktionsfähigen Komponente, aus denen bei der Reaktion mit dem Isocyanat die zum Auftreiben erforderlichen Kohlendioxidmengen entstehen, hergestellt werden, siehe z. B. EP-B-0-689 561.
Die erfindungsgemäßen zelligen Polyurethanformulierungen unterscheiden sich vorzugsweise davon durch den Einsatz überäquivalenter Wassermengen, von denen aber jeweils nur ein geringer Anteil zur Kohlendioxidbildung genutzt wird, während der überwiegend Rest latent durch den Einsatz von Quellmitteln maskiert ist und daher nicht an der Polyurethanreaktion teilnimmt. Die erfindungsgemäßen zelligen Polyurethanformulierungen können offenzellig oder geschlossenzellig sein.

Außerdem betrifft die Erfindung ein Polyurethan-Verbundmaterial, enthaltend ein hoch wasserhaltiges Polyurethan, insbesondere wie zuvor beschrieben, in Verbindung mit einem im Wesentlichen wasserfreien Polyurethan.

Die erfindungsgemäßen kompakten oder zelligen hoch wasserhaltigen Polyurethane zeichnen sich vorzugsweise dadurch aus, dass sie unbrennbar sind. Vorzugsweise sind die erfindungsgemäßen Polyurethane im Wesentlichen frei von halogen- und/oder phosphorhaltigen Flammschutzmitteln, d. h., derartige Zusätze sind höchstens in einem Anteil von bis zu 0,1 Gew.-%, bezogen auf die Gesamtmasse, vorhanden. Besonders bevorzugt sind die erfindungsgemäßen Polyurethane frei von diesen Zusätzen.

Die Masse an nicht reagiertem Wasser in den erfindungsgemäßen hoch wasserhaltigen Polyurethanen beträgt vorzugsweise 25 bis 49 Gew.%, besonders bevorzugt von 40 bis 48 Gew.-5, bezogen auf die Gesamtmasse.

Die erfindungsgemäßen hoch wasserhaltigen Polyurethane bzw. die hoch wasserhaltigen Polyurethane enthaltenden Verbundmaterialien sind für alle Anwendungen, in denen Polyurethane eingesetzt werden, insbesondere für Brandschutzanwendungen, Isoliermatten im Bauwesen, als Isolierschichten z. B. im Waggonbau, Schiffbau, Kühlmöbelbau, für die Kraftfahrzeug-Innenausstattung, für brandsensible Bereiche, wie den Bergbau, zur Hohlraumverfüllung, als Beschichtungsmaterial für brandgefährdete Bau- und Maschinenteile, als Dämpfungskissen in Schiffsfendern, zur Schall- und Wärmeisolierung für Bereiche mit besonderen ökologischen Ansprüchen, zur Herstellung orthopädischer Formteile, als Dichtungsmaterial in der Wasser-, Abwasser und Sanitärtechnik geeignet.

Die erfindungsgemäßen Polyurethane bzw. Polyurethan-Verbundmaterialien sind durch ein Verfahren erhältlich, umfassend die Reaktion einer Komponente A und einer Komponente B, gegebenenfalls in Anwendung eines Treibmittels, wobei die Komponente A Wasser in einem Anteil von mindestens 50 Gew.-%, ein organisches Quellmittel, ein Mittel zur Verhinderung des Schrumpfens, ausgewählt aus der Gruppe bestehend aus Alkylsilanen, Aminosiloxanemulsionen und Calciumsulfoaluminaten, wie sie durch Hitzebehandlung aus Calciumoxid, Aluminiumoxid und Calciumsulfat gewonnen werden, und gegebenenfalls weitere organische oder anorganische Zusatzstoffe enthält, und wobei die Komponente B ein oder mehrere Polyhydroxyverbindungen, ein oder mehrere Polyisocyanate und/oder deren Reaktionsprodukt, einen Weichmacher und weitere organische oder anorganische Zusatzstoffe enthält, wobei der Weichmacher zu mehr als 40 Gew.-%, bezogen auf das Gesamtgewicht der Weichmacher, aus nachwachsenden Rohstoffen besteht und wobei die Komponente A gegebenenfalls über die Zwischenstufe eines Konzentrats mit reduziertem Wasseranteil hergestellt wird, die Komponente B gegebenenfalls über die zwischenstufe eines Konzentrats mit reduziertem Weichmacheranteil hergestellt wird, beide Komponenten gegebenenfalls in Anwesenheit eines Treibmittels zur Reaktion gebracht werden und das resultierende hoch wasserhaltige Endprodukt gegebenenfalls zusätzlich mit einem im Wesentlichen wasserfreien Polyurethan in einen Verbundstoff überführt wird.

Die vorliegende Erfindung geht von der Erkenntnis aus, dass sich hoch wasserhaltige Polyurethanmassen durch eine spezifische Wahl der Reaktanden und durch die Verwendung neuartiger Quellmittel und Zusatzstoffe für die Komponenten A und B sowohl mit kompaktem als auch mit zelligem Habitus, einschließlich aller Übergangsbereiche zwischen diesen Ausführungsformen sowie neuartige Kombinationsprodukte mit herkömmlichen Polyurethanen nach vereinfachten Verfahren herstellen lassen, wobei durch diese Verfahrensweise hoch wasserhaltige Finalprodukte mit verbesserten Verarbeitungseigenschaften, verbesserten physikalischen und mechanischen Kennwerten generiert und dadurch zahlreiche weitere Anwendungsgebiete erschlossen werden können.

Zu diesem Zweck werden sowohl die wasserhaltige Komponente A als auch die Isocyanatkomponente B je nach dem gewünschten Anwendungszweck und den damit verbundenen Verarbeitungs- und Endeigenschaften spezifisch variiert.

Die zur Herstellung der hoch wasserhaltigen Polyurethane verwendete Komponente A enthält Wasser in einem Gewichtsanteil von mindestens 50 Gew.-%, vorzugsweise mindestens 60 Gew.-%, besonders bevorzugt mindestens 70 Gew.%, noch mehr bevorzugt mindestens 80 Gew.-% und am meisten bevorzugt mindestens 90 Gew.-% auf Basis des Gesamtgewichts der Komponente A. Als Wasser kann Leitungswasser, deionisiertes Wasser, aber auch Grubenwasser aus dem Bergbau, das üblicherweise saure Salze enthält, verwendet werden.

Weiterhin enthält die Komponente A ein Quellmittel, welches in der Lage ist, das in der Komponente A enthaltene Wasser zu binden. Das Quellmittel wird üblicherweise in einem Anteil von 0,5 bis 10 Gew.-%, vorzugsweise von 1 bis 5 Gew.-%, besonders bevorzugt von 1 bis 3 Gew.-% und am meisten bevorzugt von 1,4 bis 2,6 Gew.-%, bezogen auf das Gesamtgewicht der Komponente A, verwendet. Beispiele für Quellmittel sind Cellulosederivate, insbesondere modifizierte, z.B. hydroxylierte Cellulosederivate, wie etwa hydroxypropoxylierte Cellulosederivate, insbesondere unterschiedlich modifizierte Cellulosederivate der Fa. Dow Chemicals, wie Hydroxyethyl-Cellulose, Butylglycidylether der Cellulose, Natrium-Carboxymethyl-Cellulose, besonders bevorzugt propoxylierte Cellulosedrivate, wie sie durch Umsetzung nativer Cellulose mit unterschiedlichen Propylenoxidmengen erhalten werden.

Es wurde auch überraschenderweise festgestellt, dass flüssigkeitsaufnahmefähige organische Polymere oder Copolymere, insbesondere Polymere oder Copolymere auf Acrylbasis, z.B. auf Basis von (Meth)acrylamid, (Meth)acrylsäure und/oder (Meth)acrylestern, geeignet sind. Bevorzugt sind Copolymere auf Basis von Acrylamiden und/oder Acrylsäure, wie sie für die Herstellung von Wegwerfwindeln eingesetzt werden (z.B. Stockosorb-Sorten von Degussa/Stockhausen). Die Verwendung von Acrylaten als Wasserbinder wirkt sich positiv auf das Schrumpfungsverhalten des Endproduktes aus, indem sich die Schrumpfungsneigung allein dadurch auf ca. 1 Gew.% bzw. 1 Vol.-%, bezogen auf die Ausgangsmasse und das Ausgangsvolumen, bis zum Erreichen des End- bzw. Gleichgewichtsstandes reduzieren lässt.

Als anorganische Zusatzstoffe für die wässrige Komponente A können Erdalkalioxide bzw. Erdalkalihydroxide, wie Magnesiumoxid, Calciumhydroxid und Bariumhydroxid verwendet werden. Diese Stoffe katalysieren aufgrund ihrer Basizität nicht nur die Polyurethanreaktion, sondern binden gleichzeitig den einen Teil des als Nebenprodukt der Polyurethanreaktion entstehenden Kohlendioxids in Form der entsprechenden Carbonate. Dabei entscheidet die Art und Menge der eingesetzten Erdalkalioxide bzw. Erdalkalihydroxide mit über den Habitus des Polyurethan-Endproduktes. Wenn zellige Endprodukte gewünscht werden, muss der Anteil an Erdalkalioxiden bzw. Erdalkalihydroxiden höher sein als für kompakte, blasenfreie Polyurethanmassen. Für zellige Produkte werden Erdalkalioxide bzw. Erdalkalihydroxide in Mengen von vorzugsweise 4 bis 8 Gew.-%, besonders bevorzugt 5 bis 7 Gew-%, bezogen auf die Gesamtmasse der Komponente A, verwendet. Für kompakte, blasenfreie Formulierungen werden dagegen vorzugsweise maximal 4 Gew.-%, besonders bevorzugt 1 bis 2 Gew-%, bezogen auf die Gesamtmasse der Komponente A, eingesetzt.

Als Reaktionsverzögerer werden gegebenenfalls zusätzlich Erdalkalisalze, wie Magnesiumchlorid oder Calciumchlorid, in Mengen von vorzugsweise 0,5 bis 2,5 Gew.-%, besonders bevorzugt 1 bis 2 Gew-%, bezogen auf die Gesamtmasse der Komponente A, verwendet Zusätze von Aluminiumhydroxid in Mengen von vorzugsweise 0,5 bis 1,5 Gew.-%, besonders bevorzugt 0,75 bis 1,25 Gew.%, bezogen auf die Gesamtmasse der Komponente A, ergeben in Kombination mit den eingesetzten Acrylat-Quellmitteln ein nahezu schrumpfungsfreies Endprodukt.

Außerdem hat sich gezeigt, dass Zusatzstoffe aus der Bauindustrie und bestimmte Textilhilfsstoffe gleichfalls einen positiven Einfluss auf die Schrumpfungsneigung der hoch wasserhaltigen Polyurethanprodukte ausüben, indem sie ihr entgegenwirken. Als vorteilhaft haben sich hierbei verschiedene Alkylsilane erwiesen. Besonders effektiv gegen die Schrumpfung, auch in Kombination mit Hydroxypropylcellulose als Quellmittel, wirken Aminoslioxanemulsionen, wie z.B. Phobe 1401 und Phobe 1200 von Degussa. Alkysilene und Aminosiloxanemulsionen werden der Komponente A in Mengen von vorzugsweise 0,5 bis 2,5 Gew.-%, besonders bevorzugt 1 bis 2 Gew.-%, bezogen auf die Gesamtmasse der Komponente A, zugesetzt.

Weitere, die Schrumpfung verhindernde Substanzen sind z.B. die in der Bauindustrie für schrumpfarme Mörtel und dimensionsstabile Betonsorten verwendeten, rein anorganischen Calciumsulfoaluminate, die durch eine spezielle Hitzebehandlung aus Calciumoxid, Aluminiumoxid und Calciumsulfat gewonnen werden und in Zusätzen von vorzugsweise 0,5 bis 2,5 Gew.-%, besonders bevorzugt 2 Gew.-%, bezogen auf die Gesamtmasse der Komponente A, auch in den erfindungsgemäßen Polyurethanmassen die Schrumpffestigkeit deutlich verbessern.

Weitere bevorzugte organische Zusätze zur Komponente A sind Harnstoff und Harnstoffderivate, wie Diphenylharnstoff, sowie verschiedene Alkylendiamine, wie z. B. Alkylendiamine verschiedener Molmassen von 400 bis 3000 mit endständigen Aminogruppen, wodurch der Hartsegmentanteil des Endproduktes gesteuert werden kann. Diese organischen Zusätze werden in Anteilen von vorzugsweise 0,2 bis 1,2 Gew.-%, besonders bevorzugt 0,5 bis 0,7 Gew.-%, bezogen auf die Gesamtmasse der Komponente A, verwendet.

Weiterhin sind Zugaben von etwas Neutralseife, z.B. als Natriumalkylsulfonat, in einem Anteil von vorzugsweise 0,1 bis 0,3 Gew.-%, besonders bevorzugt 0,2 Gew.-%, bezogen auf die Gesamtmasse der Komponente A, zur Verbesserung des Fließverhaltens vorteilhaft.

Die zuvor genannten Feststoffzusätze, insbesondere anorganische Feststoffzusätze, werden vorzugsweise nur in geringen Mengen, beispielsweise bis zu 2 oder 3 Gew.%, maximal 5 Gew.%, bezogen auf das ausreagierte Polyurethan, eingesetzt.

Die Herstellung der Komponente A erfolgt vorzugsweise über die folgenden Stufen bei Raumtemperatur und Normaldruck:
- Anquellen des Verdickungsmittels, z.B. der modifizierten Cellulose bzw. der Acrylate, in höchstens 25 % der benötigten Gesamtwassermenge, bis ein Viskositätsbereich von 1200 bis 2800 mPas, vorzugsweise 1600 bis 1900 mPas bei 20 °C erreicht ist.
- Zugabe der in weiteren 25 % der Gesamtwassermenge angemischten anorganischen und organischen Bestandteile der Komponente A, sobald die Grenzviskosität der ersten Stufe erreicht ist und anschließende intensive Durchmischung aller Bestandteile.

Auf diese Weise wird ein Konzentrat der Komponente A erhalten, das durch Zumischen der noch fehlenden 50 % der Gesamtwassermenge zu einem beliebigen Zeitpunkt und an einem beliebigen Ort in einem geeigneten Mischbehälter zur gebrauchsfertigen Komponente A aufgefüllt werden kann.

Es hat sich gezeigt, dass die Herstellung der A-Komponente über die Stufe eines Konzentrates sowohl verfahrenstechnische als auch ökonomische Vorteile hat. So wird z.B. die Gefahr der Bildung von Phasen infolge Absetzens der anorganischen Bestandteile nahezu völlig ausgeschlossen, weil die höhere Grenzviskosität des Konzentrates der Sedimentierung entgegenwirkt. Die Volumenreduzierung ist außerdem ein nicht zu unterschätzender Vorteil bezüglich der Lagerhaltung und des Transportes, indem das nahezu bei jedem Endverarbeiter verfügbare Wasser nicht unnötig über lange Wege transportiert werden muss. Selbstverständlich lässt sich aber auch auf Wunsch und im Bedarfsfall die komplette Komponente A beim Hersteller gebrauchsfertig mischen.

Ein weiterer Gegenstand der Erfindung ist somit ein Konzentrat der Komponente A zur Herstellung eines kompakten oder zelligen, hoch wasserhaltigen Polyurethans, enthaltend Wasser in einem Anteil von mindestens 25 bis 50 Gew.-% bezogen auf die Gesamtwassermenge der komponente A, ein organisches Quellmittel, ein Mittel zur Verhinderung des Schrumpfens ausgewählt aus der Gruppe bestehend aus Alkylsilanen, Aminosiloxan - emulsionen und Calcuim sulfoaluminaten, wie sie durch Hitzebehandlung aus Calciumoxid, Aluminiumoxid und Calciumsulfat gewannen werden und gegebenenfalls weitere organische oder anorganische Zusatzstoffe.

Als Wasser wird normales Leitungswasser mit einem pH-Wert von 6,8 bis 7,2 verwendet, wobei es sich als vorteilhaft erwiesen hat, bei Wassertemperaturen von 12 bis 25 °C, vorzugsweise 18 bis 21 °C zu arbeiten. Die Quellgeschwindigkeit der Cellulose ist stark von der Wassertemperatur abhängig. Prinzipiell ist es möglich, auch bei höheren oder tieferen Wassertemperaturen zu arbeiten als angegeben, aber im gewählten Temperaturbereich lässt sich die Reaktion am besten führen, ohne dass es zu einem irreversiblen Viskositätsanstieg, wie bei höheren Temperaturwerten oder zu einer verzögerten Quellung, wie bei niedrigen Temperaturwerten, kommt.

Darüber hinaus hat sich gezeigt, dass auch Wasser anderer Herkunft in begrenztem Umfang für die Herstellung der Komponente A geeignet ist. So haben Versuche mit Grubenwasser aus dem Untertage-Kohleabbau ergeben, dass sich die verwendeten Quellmittel, d.h. die modifizierten Cellulosearten und die quellfähigen Acrylate, auch in diesem, oft stark säurehaltigen Wasser mit pH-Werten bis hinab zu 3,8 gut anquellen lassen, wenn man längere Quellzeiten in Kauf nehmen kann oder wenn man den pH-Wert durch geeignete Zusätze, z.B. Alkali- oder Eralkalicarbonate, gezielt erhöht. Die Verwendung des in großen Mengen anfallenden Grubenwassers, das nach einem komplizierten System bewirtschaftet und an die Erdoberfläche befördert werden muss, anstelle von Leitungswasser bietet völlig neue Möglichkeiten für die Herstellung und die Verwendung von hoch wasserhaltigen Polyurethanmassen, indem diese unter Tage hergestellt und zur Hohlraumverfüllung verwendet werden können, wobei die hervorragende Brandresistenz des Materials voll zum Tragen kommt.

Für die Komponente B können die für Polyurethan-Elastomere und Polyurethan-Schäume gebräuchlichen Polyisocyanate, insbesondere Diisocyanate, wie Toluylendiisocyanate und 4,4'- Diphenylmethandiisocyanate, aber auch Naphthylendiisocyanate und aliphatische Diisocyanate, wie Hexamethylendiisocyanat, verwendet werden. Als besonders geeignet haben sich die carbodiimid-modifizierten Abkömmlinge des 4,4'-Diphenylmethandiisocyanats erwiesen, die von den Herstellern in unterschiedlich reaktiven Ausführungen, basierend auf speziellen Gemischen stellungsisomerer Derivate, angeboten werden. Durch die Verwendung solcher reaktivitätsregulierter Sorten kann man die natürliche hohe Reaktivität der Komponente A recht gut steuern, was besonders für die Herstellung kompakter, blasenfreier Endprodukte von Bedeutung ist. Die Reaktivität lässt sich aber auch mit Zusätzen von Isophorondiisocyanat gezielt beeinflussen.

Die Komponente B enthält weiterhin eine oder mehrere Polyhydroxyverbindungen. Diese Polyhydroxyverbindungen oder Polyole werden vorzugsweise im stöchiometrischen Unterschuss, z.B. im stöchiometrischen Unterschuss von 10 bis 35 %, vorzugsweise von 12 bis 30 % und besonders bevorzugt von 15 bis 27 % eingesetzt, um ein QuasiPrepolymer zu erzeugen und auf diese Weise die Polymermatrix vorzuformulieren, in die dann die wässrige Komponente A, teils reaktiv, aufgrund ihrer wasserstoffaktiven Zusätze, wie der Amine und Harnstoffe, teils indifferent, eingebettet wird. Die Komponente B hat vorzugsweise einen Gesamt-NCO-Gehalt von maximal 5 %, besonders bevorzugt von maximal 3 %, wobei sich der Gesamt-NCO-Gehalt aus dem NCO-Gehalt des eingesetzten Isocyanats, dem Anteil (Gew.-%) dieses eingesetzten Isocyanats in der Komponente B und dem teilweisen Verbrauch (Gew.-%) dieses Isocyanats durch das im stöchiometrischen Unterschuss vorhandene Polyol ergibt.

Die Polyhydroxyverbindungen bzw. Polyole sind organische Verbindungen, die zwei oder mehr, z.B. zwei oder drei, gegenüber Polyisocyanaten reaktive Hydroxylgruppen aufweisen, einschließlich Polyester- und Polyetheralkoholen. Als Polyole eignen sich vorzugsweise mittel- und langkettige Polyetheralkohole mit Funktionalitätswerten zwischen 2 und 3, die auf Basis von Glycerol oder Trimethylolpropan durch anionisches oder kationisches Aufpolymerisieren von Propylenoxid und/oder Ethylenoxid bzw. Tetrahydrofuran erhalten werden. Das Spektrum der verwendeten Polyetheralkohole reicht dabei vom Polypropylenglykol mit einer Molmasse von 400 bis zu langkettigen, überwiegend aus Propylenoxid und wenig Ethylenoxid bestehenden Polymeren mit Molmassen von 3500 bis 6500. Geeignet sind hierbei die einschlägigen Lupranol-, Desmophen-, Voranol-Typen der Firmen, BASF, Bayer, Dow Chemicals und vergleichbare Produkte anderer Hersteller.

Für die Herstellung kompakter und zelliger Elastomere wird das Quasiprepolymer, je nach gewünschtem Härtegrad, mit unterschiedlichen Mengen von Weichmachern oder Gemischen aus verschiedenen Weichmachern verdünnt. Die Weichmacher werden in einem Anteil von vorzugsweise 45 bis 75 Gew.-%, besonders bevorzugt 52 bis 68 Gew.-% bezogen auf die Gesamtmasse der Komponente B, eingesetzt. Dabei wird die Zusammensetzung der Weichmachergemische, je nach gewünschtem Härtegrad im Bereich 5:23:40 bis 5:28:35 Gew.-% (vollsynthetische Weichmacher:aromatische Mineralölextrakte:Pflanzenölester) für weiche Formulierungen und im Bereich von 5:20:40 bis 5:25:35 Gew.-% (vollsynthetische Weichmacher: Pflanzenölester:aromatische Mineralölextrakte) für mittelweiche Formulierungen variiert. Für superweiche Formulierungen werden reine Pflanzenölester bzw. Gemische daraus verwendet. Der Ersatz von Pflanzenölestern durch aromatische Mineralölextrakte führt zu einer stufenweisen Härteerhöhung.

Einerseits können dabei als Weichmacher vorwiegend Prozessöle aus der Erdölraffination verwendet werden. Prozessöle in diesem Sinne sind dabei vorwiegend Aromatenextrakte, die bei der Rohölaufbereitung in wechselnder Zusammensetzung als Nebenprodukt anfallen. Aufgrund ihres Gehalts an aromatischen und polycyclischen Aromaten sind diese Prozessöle mit den übrigen Polyurethan-Einsatzstoffen in begrenztem Umfang gut verträglich und daher als Weichmacher bedingt bis gut geeignet. Da die ölhaltigen Weichmacher in Abhängigkeit von ihren jeweiligen Kennwerten in Anteilen bis zu 60 Gew.-% in die Reifenfüllsysteme eingebracht werden können, hatte ihre Verwendung wegen ihres bisher vergleichsweise geringen Preises zusätzlich auch einen ökonomischen Aspekt.

Die Nachteile der ölhaltigen Weichmacher bestehen in ihrer schwankenden Qualität, in ihrer durch den Gehalt an polycyclischen Aromaten bedingten Toxizität, die mit einer Kennzeichnungspflicht einhergeht, in ihrer schwindenden Verfügbarkeit aufgrund von Strukturbereinigungen im Raffineriewesen und in stetig steigenden Preisen auf dem Rohölmarkt, die sich auf alle Erdölprodukte kostensteigernd auswirken.

Die schwankende Qualität der Prozessöle äußert sich insbesondere in wechselnden Gehalten an paraffinischen, naphthenischen und aromatischen Kohlenwasserstoffen und in unterschiedlichen Säuregehalten und ist von der geografischen Herkunft des Rohöls sowie vom jeweils praktizierten Aufbereitungsverfahren abhängig. Seitens der Raffinerie-Industrie besteht kein oder nur ein geringes Interesse, diese Eigenschafts-Schwankungen durch geeignete Nachbehandlungen zu minimieren, da die Aromatenextrakte definitiv als Rohprodukte gehandelt und in dieser Qualität von der weiterverarbeitenden Industrie akzeptiert werden.

Für die Polyurethanchemie gelten jedoch strengere Qualitätsanforderungen. Um Endprodukte von gleichbleibend guter Qualität zu erhalten, sind Einsatzstoffe mit eng spezifizierten Kennwerten erforderlich.

Ein besonders hervorstechender Nachteil von Prozessöl-Weichmachern besteht in ihrer Neigung, aus dem Polymerverbund auszuschwitzen. Diese nachteilige Eigenschaft hängt eng mit dem Aromatengehalt und besonders mit dem Anteil polycyclischer Aromaten zusammen. Je höher der Anteil an Aromaten und polycylischen Aromaten, also an toxischen Verbindungen, im Öl ist, um so geringer ist die Schwitzneigung. Umgekehrt nimmt die Schwitzneigung mit erhöhten Anteilen an paraffinischen und naphthenischen Kohlenwasserstoffen zu. Das bedeutet, dass ein weniger toxisches Öl als Weichmacher für Polyurethan-Elastomere schlechter geeignet ist als ein Prozessöl höherer Toxizität. Prozessöle mit Aromatengehalten von ca. 30 % und Anteilen an polycylischen Aromaten ab 1%, wie sie für schwitzfreie, weiche Polyurethan-Elastomer-Systeme am besten geeignet sind, unterliegen außerdem der Kennzeichnungspflicht gemäß den geltenden europäischen und nationalen Chemikalienverordnungen und erfordern daher die Einhaltung spezieller Vorschriften für die Lagerung und den Umgang mit diesen Rohstoffen.

Andererseits können auch vollsynthetische Weichmacher eingesetzt werden. Bei diesen Produkten handelt es sich überwiegend um Ester der Phthalsäure, wie z.B. Dioctylphthalat, Diethylhexylphthalat, Diisononylphthalat, um Ester aliphatischer Dicarbonsäuren, wie z.B. Adipinsäuredinonylester oder auch um Cyclodicarbonsäureester, wie z.B. Veresterungsprodukte aus Cyclohexan-dicarbonsäure mit C₉-Alkohol-gemischen.

Diese synthetischen Weichmacher haben zwar den Vorteil, dass sie in einer gleich bleibenden Qualität zur Verfügung stehen und aufgrund ihrer sterischen Beschaffenheit nur selten oder gar nicht zur Auswanderung aus dem Polymerverbund neigen, aber sie wirken sich im Vergleich zu den meisten Prozessölen ungünstig auf die elastischen Kennwerte des Endproduktes aus. Darüber hinaus wurden für Ester der Phthalsäure, insbesondere für das Diethylhexylphthalat, bedenkliche physiologische Eigenschaften nachgewiesen, so dass diese Weichmacher für bestimmte Anwendungsbereiche, wie Kinderspielzeug und Dekorationsartikel, von vornherein ausscheiden. Außerdem sind synthetische Weichmacher im Vergleich zu Prozessölweichmachern relativ teuer und bieten daher keinen ökonomischen Anreiz für eine Verwendung im größeren Umfang.

Günstigerweise werden daher gemäß vorliegender Erfindung zumindest überwiegend, d.h. mehr als 40 Gew.-%, vorzugsweise mehr als 50 Gew.-%, besonders bevorzugt mehr als 75 Gew.-% und besonders bevorzugt mehr als 95 Gew.-%, bezogen auf das Gesamtgewicht der Weichmacher, Weichmacher aus nachwachsenden Rohstoffen eingesetzt. Solche Weichmacher aus nachwachsenden Rohstoffen sind überwiegend Veresterungsprodukte nativer Öle bzw. die nativen Öle in geeigneter Form selbst. Die heimische, europäische und außereuropäische Flora hält ein breites Spektrum an ölhaltigen Pflanzen bereit, die zunehmend mit dem Ziel der Rohstoffgewinnung landwirtschaftlich angebaut und anschließend industriell verwertet werden. Die bisher am stärksten genutzte einheimische Ölpflanze ist der Raps. Das daraus gewonnene Rapsöl wird bereits seit geraumer Zeit als Ausgangsstoff für den so genannten Biodiesel verwendet, indem es durch Umesterung mit Methanol in eine treibstofftaugliche Qualität überführt wird.

Darüber hinaus sind inzwischen zahlreiche weitere Ölpflanzen als Rohstoffquellen für die chemische und für die Mineralölindustrie interessant geworden, wie Sonnenblumen, Sojapflanzen, Hanf, Mohn, Öllein, Leindotter, Oliven, Saflor, Ricinus und verschiedene Distel- und Palmenarten.

Für den vorliegenden Verwendungszweck als Weichmacher haben sich vor allem die Veresterungsprodukte von Rapsöl, Palmöl und Ricinusöl als geeignet erwiesen, z.B. Rapsölmethylester, Palmölmethylester und Ricinusölmethylester. Überraschenderweise hat sich dabei gezeigt, dass die herkömmlichen Prozessöl-Weichmacher vollständig durch Umesterungsprodukte des Raps-, Palm- und Ricinusöls ersetzt werden können. Diese Pflanzenölester zeigen eine sehr gute Verträglichkeit mit allen sonstigen Bestandteilen der Polyurethan-Systeme, wirken sich nicht nachteilig auf die physikalisch-mechanischen Eigenschaften der Polyurethan-Endprodukte aus und neigen, entgegen den Erwartungen, nicht zum Ausschwitzen, das wegen der überwiegend linearen Struktur, der geringen Dichte und niedrigen Viskosität dieser Verbindungen anfänglich befürchtet werden musste. Stattdessen weisen die mit ihnen hergestellten Endprodukte vollkommen glatte und trockene Oberflächen auf, die über einen weiten Temperaturbereich unverändert erhalten bleiben. Außerdem sind die Pflanzenölester in jedem Verhältnis mit Prozessöl- und synthetischen Weichmachern mischbar, was die Verwendung von Gemischen aus unterschiedlich gearteten Weichmachern erleichtert.

Die Komponente B wird durch Vermischen der Bestandteile in einem Rührbehälter oder Umlaufvermischer hergestellt. Dazu wird der Weichmacher vorgelegt, danach das Polyol oder Polyolgemisch zugegeben, zuletzt wird das Isocyanat bzw. Isocyanatgemisch zugesetzt. Nach einer Mischzeit von vorzugsweise 1 bis 2 Stunden wird die B-Komponente in Gebinde gefüllt. Vor ihrer Verarbeitung sollte sie vorzugsweise 8 bis 24 Stunden, besonders bevorzugt 12 bis 20 Stunden ruhen, damit sich das Quasiprepolymer möglichst vollständig ausbilden kann.

In Analogie zur Herstellungstechnologie der Komponente A ist es auch für die Komponente B möglich, wahlweise ein Konzentrat herzustellen, um Transport- und Lagerkapazität zu sparen. Zu diesem Zweck wird die Mischung nur mit einem Teil der berechneten Weichmachermenge, maximal mit 50 % davon, zubereitet. Der restliche Weichmacheranteil wird dann kurz vor der Verarbeitung zugemischt.

Ein weiterer Gegenstand der Erfindung ist somit ein Konzentrat der Komponente B, enthaltend eine oder mehrere Polyhydroxyverbindungen, ein oder mehrere Polyisocyanate und/oder deren Reaktionsprodukt, einen Weichmacher in bis zu 50 % der Gesamtmenge der zur Herstellung des Polyurethans benötigten Menge und gegebenenfalls weitere organische oder anorganische Zusatzstoffe.

Zur Herstellung hoch wasserhaltiger Polyurethanmassen mit kompaktem und zelligem Habitus werden die Komponenten A und B in einem geeigneten Gewichts- oder Volumenverhältnis in einer Mischvorrichtung innig miteinander vermischt und zur Reaktion gebracht, wobei das Mischungsverhältnis zur Herstellung hoch wasserhaltiger Schäume für A:B auch 1:0,2 bis 1:1, vorwiegend aber 1:0,4 bis 1:0,8 betragen kann.

Bei der Herstellung zelliger Polyurethanmassen können zusätzliche Treibmittel verwendet werden, wie sie auf dem Gebiet der Herstellung von Polyurethanen üblich sind, beispielsweise Kohlenwasserstoffe, wie etwa Pentan oder Halogenkohlenwasserstoffe, wie etwa Fluorchlor- oder Fluorkohlenwasserstoffe,

Die Herstellung zelliger Polyurethanmassen erfolgt jedoch vorzugsweise ohne den Zusatz herkömmlicher Treibmittel, wie Pentan oder Fluorchlor-bzw. Fluorkohlenwasserstoffe. Als Treibmittel für die erfindungsgemäßen Polyurethanmassen wird vorzugsweise ausschließlich das aus der Reaktion von Wasser und Isocyanat stammende Kohlendioxid genutzt, wobei die Menge und die Geschwindigkeit der Gasbildung durch die Zusammensetzung der Komponenten A und B beeinflusst wird.

Alle erfindungsgemäßen Polyurethanmassen können ohne Zusatz üblicher Katalysatoren, wie zinnorganischer Verbindungen oder Diazabicyclooctan (Dabco), hergestellt werden, da die basischen Bestandteile der Komponente A, die Erdalkaliverbindungen sowie die aminterminierten Polyetheralkohole die Polyurethanreaktion ausreichend katalysieren. Je größer der pH-Wert der Komponente A ist, um so schneller kommt die Polyurethanreaktion in Gang und um so kürzer ist die Aushärtungszeit.

Zellige, hoch wasserhaltige Polyurethanschäume gemäß vorliegender Erfindung zeichnen sich vorzugsweise durch eine Raumdichte von 0,03 bis 0,3 g/cm³, besonders bevorzugt von 0,06 bis 0,19 g/cm³ aus. Gegebenenfalls werden zur Erzielung einer gleichmäßigen Porosität Schaumstabilisatoren der Tegostab^{®}-Reihe zugesetzt.

Die Schrumpfbeständigkeit der erfindungsgemäßen Polyurethanmassen ist durch die definierte Dosierung der beschriebenen Zusätze im Vergleich zu den Formulierungen gemäß DE 196 01 058 erheblich besser. Während die Formulierungen gemäß DE 196 01 058 innerhalb von 30 Tagen bei Raumtemperatur und Normaldruck durch die Wasserdampfdiffusion aus dem Polymer einen Gewichtsverlust von 9 bis 11 % aufweisen, danach aber nicht weiter schrumpfen, ist die Gewichtskonstanz der erfindungsgemäßen Polyurethanmassen in engen Grenzen gewährleistet und beträgt vorzugsweise ≤ 5 Gew.-%, besonders bevorzugt ≤ 1 Gew.-% und am meisten bevorzugt 0,01 bis 0,2 Gew.-% nach 30 Tagen, bezogen auf die Gesamtmasse, nach Aufbewahrung bei Raumtemperatur und Normaldruck.

Für die Dimensionsstabilität bzw. Volumenkonstanz gelten die entsprechenden Werte unter Berücksichtigung der Raumdichte der Polyurethanmasse. So gelten die analogen Werte in Vol.%, wenn das ausreagierte Material in den Formulierungen ein spezifisches Gewicht um 1,0 g/cm³ hat, d.h. Gewichtsprozent sind gleich Volumenprozent. Vorzugsweise beträgt die Volumenkonstanz ≤ 5 Vol.-%, besonders bevorzugt ≤ 1 Vol.-% und am meisten bevorzugt 0,01 bis ≤ 0,2 Vol.-%.

Das Schrumpfungsverhalten wird folgendermaßen bestimmt: Das ausgehärtete Material wird zu würfelförmigen Körpern von 5 cm Kantenlänge gesägt. Jeweils 5 Prüfkörper bilden eine Messreihe. Die Prüfkörper werden bei Raumtemperatur (20° C) und Normaldruck (jeweils herrschender Luftdruck) aufbewahrt. Im Abstand von 48 Stunden, über einen Zeitraum von 30 Tagen werden Gewicht und Kantenlänge bestimmt und daraus die Gewichts- und Volumenänderung ermittelt.

Die erfindungsgemäßen Polyurethanfüllmassen, speziell die kompakten Formulierungen, lassen sich für spezielle Anwendungszwecke, z.B. für Dicht- und Isoliermaterialen, sehr gut mit unterschiedlichen Füllstoffen verstrecken, wodurch höhere Härten und Zugfestigkeitswerte als bei den füllstofffreien Formulierungen erzielt werden. Besonders gut geeignete Füllstoffe sind Quarzmehl, Schwerspatpulver, Microballoons, Aluminiumpulver, Seesand und Balsaholzmehl. Dazu werden die Füllstoffe in Mengen von 5 bis 70 Gew.-%, vorzugsweise 15 bis 60 Gew.-%, bezogen auf die Gesamtmasse der Komponenten A + B, in der noch flüssigen Reaktionsmischung homogen verteilt und auf diese Weise in die Polymermatrix eingebunden.

Die erfindungsgemäßen Polyurethanmassen sind vorzugsweise schwer entflammbar oder unbrennbar, wie durch die nachfolgend beschriebene Labormethode bestimmt:
Frei aufgehängte Prüfkörper der Abmessung 250 x 120 x 60 mm werden 7 Minuten bei einer Temperatur von 700 bis 750 °C direkt beflammt, wobei die Zeit bis zur ersten Brandreaktion und bis zum Verlöschen der Flamme gemessen wird. Es wird folgende Einteilung getroffen: Entflammung nach 2 Minuten Flammenkontakt und gleichmäßiges Abbrennen: brennbar; Entflammung nach 4 Minuten Flammenkontakt und Selbstverlöschen nach 1 Minute Brenndauer: schwer entflammbar; keine Entflammung: unbrennbar.

Darüber hinaus hat sich gezeigt, dass sich ausreagierte hoch wasserhaltige Polyurethanmassen innerhalb eines Zeitraumes von vorzugsweise 1 bis 12, besonders bevorzugt 4 bis 9 Stunden, nach ihrer Herstellung ohne weitere Zusätze mit herkömmlichen, im wesentlichen wasserfreien Polyurethanmassen durch Aufbringen von deren Reaktionsgemischen aus den jeweiligen Komponenten A und B in entsprechenden Formteilen oder durch freie Beschichtung compoundieren lassen, wodurch neue hochwertige Polyurethanmassen für spezielle Anwendungszwecke, z.B. Schiffsfender, entstehen, in denen sich die hervorragenden Eigenschaften beider Polyurethan-Ausführungsformen, der wasserhaltigen und der wasserfreien, in idealer Weise zu neuen Gebrauchswerteigenschaften vereinen lassen.

Weiterhin soll die Erfindung durch die nachfolgenden Beispiele erläutert werden.

### Beispiele

### Allgemeines Herstellungsbeispiel für kompakte Formulierungen

Zur Herstellung der Komponente A wird zunächst das Verdickungsmittel, d.h. die modifizierte Cellulose bzw. das Acrylat in höchstens 25 % der benötigten Gesamtwassermenge unter stetigem Rühren angequollen, bis ein Viskositätsbereich von 1000 bis 2500 mPas, vorzugsweise 1600 bis 1900 mPas bei 20° C erreicht ist. Danach werden die in weiteren 25 % der Gesamtwassermenge angemischten anorganischen und organischen Bestandteile der Komponente A zugeführt. Die restlichen 50 % der Gesamtwassermenge werden erst kurz vor der Polyurethanreaktion mit der Komponente B unter kräftigem Rühren zugegeben. Die Komponente B wird durch Vermischen aller Bestandteile hergestellt, wobei das Isocyanat als letzter Bestandteil zugefügt wird. Vor der Verarbeitung muss die Komponente B mindestens 8 Stunden ruhen.

Die Polyurethanreaktion erfolgt durch Vermischen der Komponenten A und B im Volumen- oder Gewichtsverhältnis 1:1 bei Raumtemperatur und anschließendes kurzzeitiges Entgasen bei 20 bis 60 mm Hg, vorzugsweise 30-55 mm Hg, oder durch Einbringen der Reaktionsmischung unter einem Pumpendruck von 2 bis 30 bar, vorzugsweise 5 bis 25 bar, in eine geschlossene Form, wobei die Mischung innerhalb von 8 bis 12 Stunden zu einer elastischen, blasenfreien Masse aushärtet.

### Vergleichsbeispiel 1

Nach der unter dem allgemeinen Herstellungsbeispiel beschriebenen Methode werden 400 g Komponente A und 400 g Komponente B hergestellt, nach Zumischen von weiteren 100 g Wasser zur Komponente A miteinander zur Reaktion gebracht und danach folgende Eigenschaften gemessen:
Bei den folgenden Beispielen und Vergleichsbeispielen werden die nachfolgend aufgeführten Abkürzungen verwendet:

| | |
|---|---|
| MM: | Molmasse |
| PPET: | Polyetheralkohol auf Basis Glycerin oder Trimethylolpropan, Propylenoxid und Ethylenoxid (Polyoxypropylenethylentriol), z. B. Lupranol^{®} 2024 oder Desmocast^{®} 8901 Y |
| EDA-Polyol: | Polyetheralkohol auf Basis Ethylendiamin und Propylenoxid, z. B. Arcol^{®} 3420 oder Arcol^{®} 3450 |
| 4,4'-MDI: | Diphenylmethandiisocyanat, z. B. Lupranat^{®} MM 103 oder Desmodur^{®} CD oder Suprasec^{®} 2020 |
| PPG 400: | Polyetheralkohol auf Basis Ethylenglykol und Propylenoxid, z. B. Voranol^{®} 400 oder Desmophen^{®} 4000 Z |
| PPG-Diamin: | Aminterminiertes Polypropylenglykol, z. B. Jeffamine^{®} D 230 oder Jeffamin^{®} D 400 |

| ***Komponente A*** | |
|---|---|
| Hydroxypropylcellulose, z. B. Methocel^{®} J75 MS | 5,60 g |
| Wasser | 200,00 g |
| Magnesiumoxid | 4,00 g |
| Calciumchlorid | 1,00 g |
| Wasser | 86,52 g |
| EDA-Polyol, MM 3000 | 2,00 g |
| Na-Alkylsulfonat, z. B. Linda^{®} neutral | 0,80 g |
| Methylpolysiloxan, z. b. Silicex^{®} 107 A | 0,08 g |
| (Wasser) | (100,00 g) |
| Viskosität b. 20°C (mPas), vor der Verdünnung | 1940 |
| gemessen | 9,9 |
| pH-Wert | |

| ***Komponente B*** | |
|---|---|
| PPET, MM 6000 | 84,00 g |
| PPET, MM 3500 | 8,00 g |
| Rapsölmethylester | 240,00 g |
| Diisooctylphthalat, z. B. Palatinol^{®} AH | 8,00 g |
| Palmölmethylester | 20,00 g |
| 4,4'-MDI, z. B. Lupranat^{®} MM 103 | 40,00 g |
| Viskosität b. 20°C (mPas) | 650 |
| NCO-Gehalt (%) | 2,8 |

| ***Komponente A + B*** | |
|---|---|
| Topfzeit (min) bei Raumtemperatur | 27 |
| Shore A-Härte | 9-10 |
| Zugfestigkeit (kN/m²) | 1085 |
| Dehnung (%) | 440 |
| Weiterreißwiderstand (kN/m) | 5,1 |
| Brennbarkeit | schwer entflammbar |
| Schrumpfung nach 30 Tagen (Gew.-%) | 3,2 |

### Vergleichsbeispiel 2

Nach der Methode des allgemeinen Herstellungsbeispiels für kompakte Formulierungen und analog dem Vergleichsbeispiel 1 werden folgende Komponenten A und B hergestellt, nach Zumischen von weiteren 100 g Wasser zur Komponente A miteinander zur Reaktion gebracht und folgende Eigenschaften gemessen:

| ***Komponente A*** | |
|---|---|
| Magnesiumoxid | 4,50 g |
| Aluminiumhydroxid | 2,00 g |
| Calciumchlorid | 1,50 g |
| Wasser | 183,12 g |
| Acrylsäurecopolymer | 2,00 g |
| Wasser | 100,00 g |
| PPG 400 | 4,00 g |
| Triisopropanolamin | 2, 00 g |
| Na-Alkylsulfonat | 0,80 g |
| Methypolysiloxan | 0,08 g |
| (Wasser) | (100,00 g) |
| Viskosität b. 20°C (mPas), vor der Verdünnung | 2420 |
| gemessen | 9,8 |
| pH-Wert | |

| ***Komponente B*** | |
|---|---|
| PPET, MM 6000 | 100,00 g |
| aromatischer Mineralölextrakt | 142,00 g |
| Rapsölmethylester | 120,00 g |
| 4,4' MDI | 38,00 g |
| Viskosität b. 20°C (mPas) | 650 |
| NCO-Gehalt (%) | 2,25 |

| ***Komponente A* + *B*** | |
|---|---|
| Topfzeit (min) bei Raumtemperatur | 21 |
| Shore A-Härte | 11-12 |
| Zugfestigkeit (kN/m²) | 1120 |
| Dehnung (%) | 315 |
| Weiterreißwiderstand (kN/m) | 4,29 |
| Brennbarkeit | unbrennbar |
| Schrumpfung nach 30 Tagen (Gew.-%) | 0,2 |

### Vergleichsbeispiel 3

Nach der Methode des allgemeinen Herstellungsbeispiels für kompakte Formulierungen und analog dem Vergleichsbeispiel 1 werden folgende Komponenten A und B hergestellt, nach Zumischen von weiteren 100 g Wasser zur Komponente A miteinander zur Reaktion gebracht und folgende Eigenschaften gemessen:

| ***Komponente A*** | |
|---|---|
| Magnesiumoxid | 4,50 g |
| Aluminiumhydroxid | 1,00 g |
| Calciumchlorid | 2,50 g |
| Wasser | 182,12 g |
| Hydroxypropylcellulose, z. B. Methocel^{®} J 5 MS | 1,50 g |
| Acrylsäurecopolymer | 1,50 g |
| Wasser | 100,00 g |
| PPG 400 | 4,00 g |
| Triisopropanolamin | 2,00 g |
| Na-Alkylsulfonat | 0,80 g |
| Methypolysiloxan | 0,08 g |
| (Wasser) | (100,00g) |
| Viskosität b. 20°C (mPas), vor der Verdünnung | 2535 |
| gemessen | 9,6 |
| pH-Wert | |

| ***Komponente B*** | |
|---|---|
| PPET, MM 6000 | 100,00 g |
| aromatischer Mineralölextrakt | 146,00 g |
| Rapsölmethylester | 100,00 g |
| Diisooctylphthalat Palatinol^{®} AH | 20,00 g |
| 4,4' MDI | 34,00 g |
| Viskosität b. 20°C (mPas) | 860 |
| NCO-Gehalt (%) | 2,10 |

| ***Komponente A* + *B*** | |
|---|---|
| Topfzeit (min) bei Raumtemperatur | 29 |
| Shore A-Härte | 13-15 |
| Zugfestigkeit (kN/m²) | 1210 |
| Dehnung (%) | 290 |
| Weiterreißwiderstand (kN/m) | 4,90 |
| Brennbarkeit | unbrennbar |
| Schrumpfung nach 30 Tagen (Gew.-%) | 0,2 |

### Vergleichsbeispiel 4

Nach der Methode des allgemeinen Herstellungsbeispiels für kompakte Formulierungen und analog dem Vergleichsbeispiel 1 werden folgende Komponenten A und B hergestellt, nach Zumischen von weiteren 100 g Wasser zur Komponente A miteinander zur Reaktion gebracht und folgende Eigenschaften gemessen:

| ***Komponente A*** | |
|---|---|
| Magnesiumoxid | 2,00 g |
| Aluminiumhydroxid | 1,00 g |
| Calciumchlorid | 1,00 g |
| Wasser | 185,12 g |
| Hydroxypropylcellulose | 1,50 g |
| Acrylsäurecopolymer | 1,50 g |
| Wasser | 100,00 g |
| PPG 400 | 4,00 g |
| Triisopropanolamin | 2,00 g |
| Siliconharzemulsion Tegosivin^{®} HE 829 | 0,80 g |
| Na-Alkylsulfonat | 1,00 g |
| Methypolysiloxan | 0,08 g |
| (Wasser) | (100,00 g) |
| Viskosität b. 20°C (mPas), vor der Verdünnung | 2400 |
| gemessen | 9,6 |
| pH-Wert | |

| ***Komponente B*** | |
|---|---|
| PPET, MM 6000 | 100,00 g |
| aromatischer Mineralölextrakt | 146,00 g |
| Rapsölmethylester | 100,00 g |
| Diisooctylphthalat Palatinol^{®} AH | 20,00 g |
| 4,4' MDI | 34,00 g |
| Viskosität b. 20°C (mPas) | 900 |
| NCO-Gehalt (%) | 2,10 |

| ***Komponente A* + *B*** | |
|---|---|
| Topfzeit (min) bei Raumtemperatur | 32 |
| Shore A-Härte | 15-17 |
| Zugfestigkeit (kN/m²) | 1210 |
| Dehnung (%) | 290 |
| Weiterreißwiderstand (kN/m) | 4,20 |
| Brennbarkeit | unbrennbar |
| Schrumpfung nach 30 Tagen (Gew.-%) | 0,15 |

### Vergleichsbeispiel 5

Nach der Methode des allgemeinen Herstellungsbeispiels für kompakte Formulierungen und analog dem Vergleichsbeispiel 1 werden folgende Komponenten A und B hergestellt, nach Zumischen von weiteren 100 g Wasser zur Komponente A miteinander zur Reaktion gebracht und folgende Eigenschaften gemessen:

| ***Komponente A*** | |
|---|---|
| Magnesiumoxid | 2,00 g |
| Aluminiumhydroxid | 1,00 g |
| Diphenylharnstoff | 0,70 g |
| Wasser | 184,62 g |
| Hydroxypropylcellulose | 1,50 g |
| Acrylsäurecopolymer | 1,50 g |
| Wasser | 100,00 g |
| PPG 400 | 4,00 g |
| Triisopropanolamin | 2,00 g |
| Siliconharzemulsion Tegosivin^{®} HE 8999 | 1,60 g |
| Na-Alkylsulfonat | 1,00 g |
| Methypolysiloxan | 0,08 g |
| (Wasser) | (100,00 g) |
| Viskosität b. 20°C (mPas), vor der Verdünnung | 2230 |
| gemessen | 9,1 |
| pH-Wert | |

| ***Komponente B*** | |
|---|---|
| PPET, MM 6000 | 100,00 g |
| aromatischer Mineralölextrakt | 146,00 g |
| Rapsölmethylester | 100,00 g |
| Diisooctylphthalat Palatinol^{®} AH | 20,00 g |
| 4,4' MDI | 34,00 g |
| Viskosität b. 20°C (mPas) | 890 |
| NCO-Gehalt (%) | 2,7 |

| ***Komponente A* + *B*** | |
|---|---|
| Topfzeit (min) bei Raumtemperatur | 26 |
| Shore A-Härte | 13-15 |
| Zugfestigkeit (kN/m²) | 1100 |
| Dehnung (%) | 300 |
| Weiterreißwiderstand (kN/m) | 4,10 |
| Brennbarkeit | unbrennbar |
| Schrumpfung nach 30 Tagen (Gew.-%) | 0,12 |

### Vergleichsbeispiel 6

Nach der Methode des allgemeinen Herstellungsbeispiels für kompakte Formulierungen und analog dem Vergleichsbeispiel 1 werden folgende Komponenten A und B hergestellt, nach Zumischen von weiteren 100 g Grubenwasser zur Komponente A miteinander zur Reaktion gebracht und folgende Eigenschaften gemessen:

| ***Komponente A*** | |
|---|---|
| Magnesiumoxid | 2,50 g |
| Aluminiumhydroxid | 2,00 g |
| Bariumhydroxidoctahydrat | 3,50 g |
| Wasser | 183,12 g |
| Hydroxypropylcellulose | 2,00 g |
| Grubenwasser, pH 3,1 | 100,00 g |
| PPG 400 | 4,00 g |
| Triisopropanolamin | 2,00 g |
| Na-Alkylsulfonat | 0,80 g |
| Methypolysiloxan | 0,08 g |
| (Grubenwasser, pH 3,1) | (100,00 g) |
| Viskosität b. 20°C (mPas), vor der Verdünnung | 2420 |
| gemessen | 9,8 |
| pH-Wert | |

| ***Komponente B*** | |
|---|---|
| PPET, MM 6000 | 100,00 g |
| aromatischer Mineralölextrakt | 142,00 g |
| Rapsölmethylester | 100,00 g |
| Diisooctylphthalat Palatinol^{®} AH | 20,00 g |
| 4,4' MDI | 38,00 g |
| Viskosität b. 20°C (mPas) | 590 |
| NCO-Gehalt (%) | 2,25 |

| ***Komponente A* + *B*** | |
|---|---|
| Topfzeit (min) bei Raumtemperatur | 33 |
| Shore A-Härte | 12-14 |
| Zugfestigkeit (kN/m²) | 1140 |
| Dehnung (%) | 300 |
| Weiterreißwiderstand (kN/m) | 4,10 |
| Brennbarkeit | unbrennbar |
| Schrumpfung nach 30 Tagen (Gew.-%) | 0, 30 |

### Vergleichsbeispiel 7

Nach der Methode des allgemeinen Herstellungsbeispiels für kompakte Formulierungen und analog dem Vergleichsbeispiel 1 werden folgende Komponenten A und B hergestellt, nach Zumischen von weiteren 100 g Wasser zur Komponente A miteinander zur Reaktion gebracht und folgende Eigenschaften gemessen:

| ***Komponente A*** | |
|---|---|
| Magnesiumoxid | 4,50 g |
| Aluminiumhydroxid | 2,00 g |
| Bariumhydroxidoctahydrat | 1,50 g |
| Wasser | 183,12 g |
| Hydroxypropylcellulose | 2,00 g |
| Wasser | 100,00 g |
| PPG 400 | 4,00 g |
| Triisopropanolamin | 2,00 g |
| Na-Alkylsulfonat | 0,80 g |
| Methypolysiloxan | 0,08 g |
| (Wasser) | (100,00 g) |
| Viskosität b. 20°C (mPas), vor der Verdünnung | 2220 |
| gemessen | 9,8 |
| pH-Wert | |

| ***Komponente B*** | |
|---|---|
| PPET, MM 6000 | 100,00 g |
| Rapsölmethylester | 262,00 g |
| 4,4' MDI | 38.00 g |
| Viskosität b. 20°C (mPas) | 590 |
| NCO-Gehalt (%) | 2,25 |

| ***Komponente A + B*** | |
|---|---|
| Topfzeit (min) bei Raumtemperatur | 31 |
| Shore A-Härte | 5-7 |
| Zugfestigkeit (kN/m²) | 990 |
| Dehnung(%) | 490 |
| Weiterreißwiderstand (kN/m) | 2,9 |
| Brennbarkeit | unbrennbar |
| Schrumpfung nach 30 Tagen (Gew.-%) | 0,20 |

### Vergleichsbeispiel 8

Nach der Methode des allgemeinen Herstellungsbeispiels für kompakte Formulierungen und analog dem Vergleichsbeispiel 1 werden folgende Komponenten A und B hergestellt, nach Zumischen von weiteren 100 g Wasser zur Komponente A miteinander zur Reaktion gebracht und folgende Eigenschaften gemessen:

| ***Komponente A*** | |
|---|---|
| Magnesiumoxid | 4,50 g |
| Aluminiumhydroxid | 2,00 g |
| Bariumhydroxidoctahydrat | 1,50 g |
| Wasser | 183,12 g |
| Hydroxypropylcellulose | 2,00 g |
| Wasser | 100,00 g |
| PPG 400 | 4,00 g |
| Triisopropanolamin | 2,00 g |
| Na-Alkylsulfonat | 0,80 g |
| Methypolysiloxan | 0,08 g |
| (Wasser) | (100,00 g) |
| Viskosität b. 20°C (mPas), vor der Verdünnung | 2220 |
| gemessen | 9,8 |
| pH-Wert | |

| ***Komponente* B** | |
|---|---|
| PPET, MM 6000 | 100,00 g |
| Rapsölmethylester | 232,00 g |
| aromatischer Mineralölextrakt | 30,00 g |
| 4,4' MDI | 38,00 g |
| Viskosität b. 20°C (mPas) | 690 |
| NCO-Gehalt (%) | 2,25 |

| ***Komponente A* + *B*** | |
|---|---|
| Topfzeit (min) bei Raumtemperatur | 36 |
| Shore A-Härte | 7-9 |
| Zugfestigkeit (kN/m²) | 1000 |
| Dehnung (%) | 480 |
| Weiterreißwiderstand (kN/m) | 3,1 |
| Brennbarkeit | unbrennbar |
| Schrumpfung nach 30 Tagen (Gew.-%) | 0,20 |

### Vergleichsbeispiel 9

Nach der Methode des allgemeinen Herstellungsbeispiels für kompakte Formulierungen und analog dem Vergleichsbeispiel 1 werden folgende Komponenten A und B hergestellt, nach Zumischen von weiteren 100 g Wasser zur Komponente A miteinander zur Reaktion gebracht und folgende Eigenschaften gemessen:

| ***Komponente A*** | |
|---|---|
| Magnesiumoxid | 2,50 g |
| Aluminiumhydroxid | 2,00 g |
| Bariumhydroxidoctahydrat | 3,50 g |
| Wasser | 183,12 g |
| Hydroxypropylcellulose | 2,00 g |
| Wasser | 100,00 g |
| PPG 400 | 4,00 g |
| Triisopropanolamin | 2,00 g |
| Na-Alkylsulfonat | 0,80 g |
| Methypolysiloxan | 0,08 g |
| (Wasser) | (100,00 g) |
| Viskosität b. 20°C (mPas), vor der Verdünnung | 2310 |
| gemessen | 9,8 |
| pH-Wert | |

| ***Komponente B*** | |
|---|---|
| PPET, MM 6000 | 100,00 g |
| aromatischer Mineralölextrakt | 142,00 g |
| Rapsölmethylester | 120,00 g |
| 4,4' MDI | 38,00 g |
| Viskosität b. 20°C (mPas) | 850 |
| NCO-Gehalt (%) | 2,25 |

| ***Komponente A + B*** | |
|---|---|
| Topfzeit (min) bei Raumtemperatur | 33 |
| Shore A-Härte | 10-12 |
| Zugfestigkeit (kN/m²) | 1140 |
| Dehnung (%) | 300 |
| Weiterreißwiderstand (kN/m) | 4,1 |
| Brennbarkeit | unbrennbar |
| Schrumpfung nach 30 Tagen (Gew.-%) | 0,30 |

### Vergleichsbeispiel 10

Nach der Methode des allgemeinen Herstellungsbeispiels für kompakte Formulierungen und analog dem Vergleichsbeispiel 1 werden folgende Komponenten A und B hergestellt, nach Zumischen von weiteren 100 g Wasser zur Komponente A und Zumischen von weiteren 50 % der Gesamt-Weichmachermischung zur Komponente B miteinander zur Reaktion gebracht und folgende Eigenschaften gemessen:

| ***Komponente A*** | |
|---|---|
| Magnesiumoxid | 4,50 g |
| Aluminiumhydroxid | 1,50 g |
| Calciumchlorid | 2,00 g |
| Wasser | 180,62 g |
| Hydroxypropylcellulose | 1,50 g |
| Acrylsäurecopolymer | 1,50 g |
| Wasser | 100,00 g |
| PPG 400 | 4,00 g |
| Triisopropanolamin | 2,00 g |
| Siliconharzemulsion Tegosivin^{®} HL 1000 | 1,50 g |
| Na-Alkylsulfonat | 0,80 g |
| Methypolysiloxan | 0,08 g |
| (Wasser) | (100,00 g) |
| Viskosität b. 20°C (mPas), vor der Verdünnung | 2535 |
| gemessen | 9,0 |
| pH-Wert | |

| ***Komponente B*** | |
|---|---|
| PPET, MM 6000 | 100,00 g |
| aromatischer Mineralölextrakt | 73,00 g |
| Rapsölmethylester | 50,00 g |
| Düsooctylphthalat | 10,00 g |
| 4,4' MDI | 34,00 g |
| (Weichmachergemisch analog obiger Zusammensetzung) | 133,00 g |
| Viskosität b. 20°C (mPas) | 1110 |
| NCO-Gehalt (%), nach Verdünnung | 2,60 |

| ***Komponente A + B*** | |
|---|---|
| Topfzeit (min) bei Raumtemperatur | 25 |
| Shore A-Härte | 14-16 |
| Zugfestigkeit (kN/m²) | 1130 |
| Dehnung (%) | 260 |
| Weiterreißwiderstand (kN/m) | 3,9 |
| Brennbarkeit | unbrennbar |
| Schrumpfung nach 30 Tagen (Gew.-%) | 0,15 |

### Vergleichsbeispiel 11

Nach der Methode des allgemeinen Herstellungsbeispiels für kompakte Formulierungen und analog dem Vergleichsbeispiel 1 werden folgende Komponenten A und B hergestellt, nach Zumischen von weiteren 100 g Wasser zur Komponente A und Zumischen von weiteren 50 % der Gesamt-Weichmachermischung zur Komponente B miteinander zur Reaktion gebracht und folgende Eigenschaften gemessen:

| ***Komponente A*** | |
|---|---|
| Magnesiumoxid | 4,50 g |
| Aluminiumhydroxid | 1,50 g |
| Calciumchlorid | 1,00 g |
| Harnstoff | 1,00 g |
| Wasser | 180,62 g |
| Hydroxypropylcellulose | 1,50 g |
| Acrylsäurecopolymer | 1,50 g |
| Wasser | 100,00 g |
| PPG 400 | 4,00 g |
| Triisopropanolamin | 2,00 g |
| Siliconharzemulsion Tegosivin^{®} HL 1000 | 1,50 g |
| Na-Alkylsulfonat | 0,80 g |
| Methypolysiloxan | 0,08 g |
| (Wasser) | (100,00 g) |
| Viskosität b. 20°C (mPas), vor der Verdünnung | 2490 |
| gemessen | 9,4 |
| pH-Wert | |

| ***Komponente B*** | |
|---|---|
| PPET, MM 6000 | 100,00 g |
| aromatischer Mineralölextrakt | 73,00 g |
| Rhicinusölmethylester | 50,00 g |
| Adipinsäuredinonylester | 10,00 g |
| 4,4' MDI | 34,00 g |
| (Weichmachergemisch analog obiger Zusammensetzung) | 133,00 g |
| Viskosität b. 20°C (mPas) | 1050 |
| NCO-Gehalt (%), nach Verdünnung | 2,50 |

| ***Komponente A** + **B*** | |
|---|---|
| Topfzeit (min) bei Raumtemperatur | 32 |
| Shore A-Härte | 11-13 |
| Zugfestigkeit (kN/m²) | 1180 |
| Dehnung(%) | 270 |
| Weiterreißwiderstand (kN/m) | 4,0 |
| Brennbarkeit | unbrennbar |
| Schrumpfung nach 30 Tagen (Gew.-%) | 0,2 |

### Beispiel 1

Nach der Methode des allgemeinen Herstellungsbeispiels für kompakte Formulierungen und analog dem Vergleichsbeispiel 1 werden folgende Komponenten A und B hergestellt, nach Zumischen von weiteren 100 g Wasser zur Komponente A und Zumischen von weiteren 50 % der Gesamt-Weichmachermischung zur Komponente B miteinander zur Reaktion gebracht und folgende Eigenschaften gemessen:

| ***Komponente A*** | |
|---|---|
| Magnesiumoxid | 4,50 g |
| Aluminiumhydroxid | 1,50 g |
| Calciumchlorid | 1,00 g |
| Harnstoff | 1,00 g |
| Wasser | 180,12 g |
| Hydroxypropylcellulose | 1,50 g |
| Calciumsulfoaluminat Cevamit^{®} | 2,00 g |
| Wasser | 100,00 g |
| PPG 400 | 4,00 g |
| Triisopropanolamin | 2,00 g |
| Siliconharzemulsion Tegosivin^{®} HL 1000 | 1,50 g |
| Na-Alkylsulfonat | 0,80 g |
| Methypolysiloxan | 0,08 g |
| (Wasser) | (100,00 g) |
| Viskosität b. 20°C (mPas), vor der Verdünnung | 2490 |
| gemessen | 9,4 |
| pH-Wert | |

| ***Komponente B*** | |
|---|---|
| PPET, MM 6000 | 100,00 g |
| aromatischer Mineralölextrakt | 73,00 g |
| Rhicinusölmethylester | 50,00 g |
| Palmölmethylester | 10,00 g |
| 4,4' MDI | 34,00 g |
| (Weichmachergemisch analog obiger | 133,00 g |
| Zusammensetzung) | |
| Viskosität b. 20°C (mPas) | 1030 |
| NCO-Gehalt (%), nach Verdünnung | 2,40 |

| ***Komponente A* + *B*** | |
|---|---|
| Topfzeit (min) bei Raumtemperatur | 30 |
| Shore A-Härte | 15-18 |
| Zugfestigkeit (kN/m²) | 1300 |
| Dehnung (%) | 250 |
| Weiterreißwiderstand (kN/m) | 4,2 |
| Brennbarkeit | unbrennbar |
| Schrumpfung nach 30 Tagen (Gew.-%) | 0,01 |

### Allgemeines Herstellungsbeispiel für zellige Formulierungen

Die Komponenten A und B werden entsprechend dem allgemeinen Herstellungsbeispiel für kompakte Formulierungen hergestellt. Die Polyurethanreaktion erfolgt durch Vermischen der Komponenten A und B im Volumen- oder Gewichtsverhältnis 1:1 bei Raumtemperatur gegen den Atmosphärendruck, wobei die Mischung aufbläht und innerhalb von 5 bis 15 Minuten zu einer zelligen Struktur aushärtet.

### Vergleichsbeispiel 12

Nach der Methode des allgemeinen Herstellungsbeispiels für zellige Formulierungen werden folgende Komponenten A und B hergestellt, nach Zumischen von weiteren 100 g Wasser zur Komponente A im vorliegenden Gewichtsverhältnis (1:1) miteinander zur Reaktion gebracht und folgende Eigenschaften gemessen:

| ***Komponente A*** | |
|---|---|
| Magnesiumoxid | 2,00 g |
| Calciumhydroxid | 2,00 g |
| Aluminiumhydroxid | 1,00 g |
| Bariumhydroxidoctahydrat | 3,00 g |
| Wasser | 183,20 g |
| Hydroxypropylcellulose | 1,50 g |
| Wasser | 100,00 g |
| PPG 400 | 4,00 g |
| PPG-Diamin, MM 400 | 2,00 g |
| Schaumstabilisator Tegostab^{®} B 4113 | 0,50 g |
| Na-Alkylsulfonat | 0,80 g |
| (Wasser) | (100,00 g) |
| Viskosität b. 20°C (mPas), vor der Verdünnung | 2200 |
| gemessen | 10,1 |
| pH-Wert | |

| ***Komponente B*** | |
|---|---|
| PPET, MM 6000 | 80,00 g |
| PPET, MM 3500 | 20,00 g |
| aromatischer Mineralölextrakt | 136,00 g |
| Rapsölmethylester | 120,00 g |
| 4,4' MDI | 34,00 g |
| Naphthylendiisocyanat | 10,00 g |
| Viskosität b. 20°C (mPas) | 870 |
| NCO-Gehalt (%), nach Verdünnung | 3,0 |

| ***Komponente A* + *B*** | |
|---|---|
| Klebfreizeit (min) bei Raumtemperatur | 12 |
| Raumdichte (g/cm³) | 0,19 |
| Stauchhärte 40 % (kPa) | 4,1 |
| Zugfestigkeit (kPa) | 120 |
| Dehnung (%) | 110 |
| Brennbarkeit | schwer |
| | entflammbar |
| Schrumpfung nach 30 Tagen (Gew.-%) | 0,2 |

### Vergleichsbeispiel 13

Nach der Methode des allgemeinen Herstellungsbeispiels für zellige Formulierungen und analog dem Vergleichsbeispiel 12 werden folgende Komponenten hergestellt, im vorliegenden Gewichtsverhältnis (1:0,8) miteinander zur Reaktion gebracht und folgende Eigenschaften gemessen:

| ***Komponente A*** | |
|---|---|
| Magnesiumoxid | 2,00 g |
| Aluminiumhydroxid | 1,00 g |
| Bariumhydroxidoctahydrat | 5,00 g |
| Wasser | 187,20 g |
| Hydroxypropylcellulose | 1,50 g |
| Acrylsäurecopolymer | 1,50 g |
| Wasser | 92,00 g |
| PPG 400 | 4,00 g |
| Siliconharzemulsion Tego^{®} Phobe 1200 | 1,50 g |
| Diethylentriamin | 1,00 g |
| PPG-Diamin, MM 400 | 2,00 g |
| Schaumstabilisator Tegostab^{®} B 4113 | 0,50 g |
| Na-Alkylsulfonat | 0,80 g |
| (Wasser) | (100,00 g) |
| Viskosität b. 20°C (mPas), vor der Verdünnung | 2480 |
| gemessen | 11 |
| pH-Wert | |

| ***Komponente B*** | |
|---|---|
| PPET, MM 6000 | 64,00 g |
| PPET, MM 3500 | 16,00 g |
| aromatischer Mineralölextrakt | 105,60 g |
| Rapsölmethylester | 80,00 g |
| Diisooctylphthalat | 16,00 g |
| 4,4' MDI | 30,40 g |
| Naphthylendiisocyanat | 8,00 g |
| Viskosität b. 20°C (mPas) | 830 |
| NCO-Gehalt (%), nach Verdünnung | 3,1 |

| ***Komponenten A* + *B*** | |
|---|---|
| Klebfreizeit (min) bei Raumtemperatur | 6 |
| Raumdichte (g/cm³) | 0,14 |
| Stauchhärte 40 % (kPa) | 3,8 |
| Zugfestigkeit (kPa) | 140 |
| Dehnung (%) | 120 |
| Brennbarkeit | unbrennbar |
| Schrumpfung nach 30 Tagen (Gew.-%) | 0,15 |

### Beispiel 2

Nach der Methode des allgemeinen Herstellungsbeispiels für zellige Formulierungen und analog dem Vergleichsbeispiel 12 werden folgende Komponenten hergestellt, im vorliegenden Gewichtsverhältnis (1:0,4) miteinander zur Reaktion gebracht und folgende Eigenschaften gemessen:

| ***Komponente A*** | |
|---|---|
| Magnesiumoxid | 2,00 g |
| Aluminiumhydroxid | 1,00 g |
| Bariumhydroxidoctahydrat | 5,00 g |
| Wasser | 189,20 g |
| Hydroxypropylcellulose | 2,00 g |
| Wasser | 92,00 g |
| PPG 400 | 4,00 g |
| Diethylentriamin | 1,00 g |
| PPG-Diamin, MM 200 | 2,00 g |
| Siliconharzemulsion Tego^{®} Phobe 1401 | 1,00 g |
| Na-Alkylsulfonat | 0,80 g |
| (Wasser) | (100,00 g) |
| Viskosität b. 20°C (mPas), vor der Verdünnung | 2400 |
| gemessen | 11 |
| pH-Wert | |

| ***Komponente B*** | |
|---|---|
| PPET, MM 6000 | 30,80 g |
| PPET, MM 3500 | 8,00 g |
| aromatischer Mineralölextrakt | 49,20 g |
| Rapsölmethylester | 40,00 g |
| Palmölmethylester | 8,00 g |
| 4,4' MDI | 16,00 g |
| Isophorondiisocyanat | 8,00 g |
| Viskosität b. 20°C (mPas) | 850 |
| NCO-Gehalt (%), nach Verdünnung | 4,9 |

| ***Komponente A* + *B*** | |
|---|---|
| Klebfreizeit (min) bei Raumtemperatur | 4 |
| Raumdichte (g/cm³) | 0,13 |
| Stauchhärte 40 % (kPa) | 4,5 |
| Zugfestigkeit (kPa) | 110 |
| Dehnung (%) | 140 |
| Brennbarkeit | unbrennbar |
| Schrumpfung nach 30 Tagen (Gew.-%) | 0,05 |

### Vergleichsbeispiel 14

Nach der Methode des allgemeinen Herstellungsbeispiels für zellige Formulierungen und analog dem Vergleichsbeispiel 12 werden folgende Komponenten hergestellt, im vorliegenden Gewichtsverhältnis (1:1) miteinander zur Reaktion gebracht und folgende Eigenschaften gemessen:

| ***Komponente A*** | |
|---|---|
| Magnesiumoxid | 2,00 g |
| Aluminiumhydroxid | 1,50 g |
| Bariumhydroxidoctahydrat | 5,00 g |
| Wasser | 188,20 g |
| Acrylsäurecopolymer | 1,50 g |
| Wasser | 92,00 g |
| PPG 400 | 4,00 g |
| Triethylamin | 1,00 g |
| PPG-Diamin, MM 400 | 2,00 g |
| Alkylsilan Protectosil^{®} 100 N | 2,00 g |
| Na-Alkylsulfonat | 0,80 g |
| (Wasser) | (100,00 g) |
| Viskosität b. 20°C (mPas), vor der Verdünnung | 2390 |
| gemessen | 11 |
| pH-Wert | |

| ***Komponente B*** | |
|---|---|
| PPET, MM 6000 | 80,00 g |
| PPET, MM 3500 | 20,00 g |
| aromatischer Mineralölextrakt | 136,00 g |
| Rapsölmethylester | 100,00 g |
| Diisooctylphthalat | 20,00 g |
| 4,4' MDI | 34,00 g |
| Naphtylendiisocyanat | 10,00 g |
| Viskosität b. 20°C (mPas) | 840 |
| NCO-Gehalt (%), nach Verdünnung | 3,4 |

| ***Komponente A* + *B*** | |
|---|---|
| Klebfreizeit (min) bei Raumtemperatur | 4 |
| Raumdichte (g/cm³) | 0,09 |
| Stauchhärte 40 % (kPa) | 4,2 |
| Zugfestigkeit (kPa) | 130 |
| Dehnung (%) | 110 |
| Brennbarkeit | unbrennbar |
| Schrumpfung nach 30 Tagen (Gew.-%) | 0,05 |

### Vergleichsbeispiel 15

Nach der Methode des allgemeinen Herstellungsbeispiels für zellige Formulierungen und analog dem Vergleichsbeispiel 12 werden folgende Komponenten hergestellt, nach Zumischen von weiteren 100g Wasser zur Komponente A und Zumischen von 50 % der Gesamt-Weichmachermischung zur Komponente B im vorliegenden Gewichtsverhältnis (1:1) miteinander zur Reaktion gebracht und folgende Eigenschaften gemessen:

| ***Komponente A*** | |
|---|---|
| Magnesiumoxid | 2,00 g |
| Aluminiumhydroxid | 1,50 g |
| Bariumhydroxidoctahydrat | 5,00 g |
| Wasser | 189,20 g |
| Acrylsäurecopolymer | 1,50 g |
| Wasser | 92,00 g |
| PPG 400 | 4,00 g |
| Triethylamin | 1,00 g |
| PPG-Diamin, MM 400 | 2,00 g |
| Alkylsilan Protectosil^{®} 40 S | 1,00 g |
| Na-Alkylsulfonat | 0,80 g |
| (Wasser) | (100,00 g) |
| Viskosität b. 20°C (mPas), vor der Verdünnung | 2430 |
| gemessen | 11 |
| pH-Wert | |

| ***Komponente B*** | |
|---|---|
| PPET, MM 6000 | 80,00 g |
| PPET, MM 3500 | 20,00 g |
| aromatischer Mineralölextrakt | 68,00 g |
| Rapsölmethylester | 50,00 g |
| Diisooctylphthalat | 10,00 g |
| 4,4' MDI | 34,00 g |
| Toluylendiisocyanat (TDI 80/20) | 10,00 g |
| Weichmachergemisch analog obiger Zusammensetzung | 128,00 g |
| Viskosität b. 20°C (mPas) | 840 |
| NCO-Gehalt (%), nach Verdünnung | 3,4 |

| ***Komponente A* + *B*** | |
|---|---|
| Klebfreizeit (min) bei Raumtemperatur | 7 |
| Raumdichte (g/cm³) | 0,10 |
| Stauchhärte 40 % (kPa) | 3,0 |
| Zugfestigkeit (kPa) | 130 |
| Dehnung (%) | 100 |
| Brennbarkeit | unbrennbar |
| Schrumpfung nach 30 Tagen (Gew.-%) | 0,05 |

### Vergleichsbeispiel 16

Nach der Methode des allgemeinen Herstellungsbeispiels für zellige Formulierungen und analog dem Vergleichsbeispiel 12 werden folgende Komponenten hergestellt, nach Zumischen von weiteren 100g Wasser zur Komponente A und Zumischen von 50 % der Gesamt-Weichmachermischung zur Komponente B im vorliegenden Gewichtsverhältnis (1:1) miteinander zur Reaktion gebracht und folgende Eigenschaften gemessen:

| ***komponente A*** | |
|---|---|
| Aluminiumhydroxid | 1,50 g |
| Bariumhydroxidoctahydrat | 7,00 g |
| Wasser | 190,50 g |
| Acrylsäurecopolymer | 1,50 g |
| Wasser | 92,00 g |
| PPG 400 | 4,00 g |
| Triethylamin | 1,00 g |
| PPG-Diamin, MM 3000 | 0,70 g |
| Alkylsilan Protectosil^{®} 40 S | 1,00 g |
| Na-Alkylsulfonat | 0,80 g |
| (Wasser) | (100,00 g) |
| Viskosität b. 20°C (mPas), vor der Verdünnung | 2390 |
| gemessen | 12 |
| pH-Wert | |

| ***Komponente B*** | |
|---|---|
| PPET, MM 6000 | 80,00 g |
| PPET, MM 3500 | 20,00 g |
| Diethylhexylphthalat | 68,00 g |
| Palmölmethylester | 60,00 g |
| 4,4' MDI | 34,00 g |
| Hexamethylendiisocyanat-1,6 | 10,00 g |
| Weichmachergemisch analog obiger Zusammensetzunq | 128,00 g |
| Viskosität b. 20°C (mPas) | 1250 |
| NCO-Gehalt (%), nach Verdünnung | 3,0 |

| ***Komponente A* + *B*** | |
|---|---|
| Klebfreizeit (min) bei Raumtemperatur | 4 |
| Raumdichte (g/cm³) | 0,06 |
| Stauchhärte 40 % (kPa) | 3,5 |
| Zugfestigkeit (kPa) | 110 |
| Dehnung (%) | 140 |
| Brennbarkeit | unbrennbar |
| Schrumpfung nach 30 Tagen (Gew.-%) | 0,05 |

### Vergleichsbeispiel 17

Zur Herstellung kompakter Formteile, die einer direkten Wassereinwirkung ausgesetzt werden sollen, werden die hoch wasserhaltigen kompakten Polyurethanmassen gemäß Beispiel 1 bzw. gemäß den Vergleichsbeispielen 1 bis 11 nach einer Aushärtezeit von 4 bis 9 Stunden in einer entsprechend dem Anwendungszweck geeigneten Form mit einem frisch hergestellten und noch nicht ausgehärteten, herkömmlichen, wasserfreien Polyurethan-Elastomer, das nach einem stöchiometrischen Polyadditionsverfahren hergestellt wurde, wie z. B. der nachfolgend aufgeführten Zusammensetzung, überschichtet bzw. ummantelt:
200 g Polyurethan-Elastomer, z. B. gemäß Vergleichsbeispiel 1,
200 g Polyurethan-Elastomer, hergestellt aus
100 g Komponente A und 100 g Komponente B, bestehend aus:

| **Komponente A** | | **Komponente B** | |
|---|---|---|---|
| aromatischer Mineralölextrakt | 23,90 g | aromatischer Mineralölextrakt | 35,49 g |
| Palmölmethylester | 23,90 g | Palmölmethylester | 40,50 g |
| PPET, MM 6000 | 49,00 g | PPET, MM 6000 | 11,00 g |
| PPG 400 | 2,00 g | Silikonentschäumer | 0,01 g |
| Dicyclohexylamin | 0,90 g | 4,4'-MDI | 13,00 g |
| Wasser | 0,30 g | | |

### Beispiel 3

Zur Herstellung kombinierter zellig-kompakter Formteile für diverse Anwendungszwecke werden die zelligen, hoch wasserhaltigen Polyurethanmassen gemäß dem Beispiel 2 bzw. gemäß den Vergleichsbeispielen 12 bis 16 nach einer Aushärtezeit von 1 bis 2 Stunden in einer entsprechend dem Anwendungszweck geeigneten Form mit einem frisch hergestellten und noch nicht ausgehärteten, herkömmlichen, wasserfreien Polyurethan-Elastomer, z. B. gemäß dem Vergleichsbeispiel 17, überschichtet bzw. ummantelt.
200 g Polyurethan-Elastomer, z. B. gemäß Vergleichsbeispiel 12,
200 g wasserfreies, kompaktes Polyurethan-Elastomer gemäß Vergleichsbeispiel 17.

### Vergleichsbeispiel 18

100g Komponente A und 100 g Komponente B, z. B. gemäß Vergleichsbeispiel 1, werden innig miteinander vermischt, danach mit 40 g Quarzmehl zu einer homogenen Masse verrührt und der Aushärtung bei Raumtemperatur überlassen. Das Endprodukt hat folgende Eigenschaften:

| | |
|---|---|
| Shore A-Härte | 25-27 |
| Zugfestigkeit | 1270 |
| Dehnung (%) | 210 |
| Weiterreißwiderstand (kN/m) | 6,2 |
| Brennbarkeit | unbrennbar |
| Schrumpfung nach 30 Tagen (Gew.-%) | 0,10 |

## Patentansprüche

1. Kompaktes oder zelliges, hoch wasserhaltiges Polyurethan, erhältlich durch Reaktion einer Komponente A und einer Komponente B, gegebenenfalls in Anwesenheit eines Treibmittels, wobei die Komponente A Wasser in einem Anteil von mindestens 50 Gew.-%, ein organisches Quellmittel, ein Mittel zur Verhinderung des Schrumpfens, ausgewählt aus der Gruppe bestehend aus Alkylsilanen, Aminosiloxanemulsionen und Calciumsulfoaluminaten, wie sie durch Hitzebehandlung aus Calciumoxid, Aluminiumoxid und Calciumsulfat gewonnen werden, und gegebenenfalls weitere organische oder anorganische Zusatzstoffe enthält, und
wobei die Komponente B eine oder mehrere Polyhydroxyverbindungen, ein oder mehrere Polyisocyanate und/oder deren Reaktionsprodukt, einen Weichmacher und gegebenenfalls weitere organische oder anorganische Zusatzstoffe enthält, wobei der Weichmacher zu mehr als 40 Gew.-%, bezogen auf das Gesamtgewicht der Weichmacher, aus nachwachsenden Rohstoffen besteht.

2. Polyurethan nach Anspruch 1,
**dadurch gekennzeichnet, dass** das organische Quellmittel ausgewählt ist aus Polymeren auf Acrylbasis.

3. Polyurethan nach einem der Ansprüche 1 oder 2,
**dadurch gekennzeichnet, dass** die Weichmacher zumindest teilweise ausgewählt sind aus nativen Ölen, insbesondere Pflanzenölen und deren Veresterungsprodukten.

4. Polyurethan nach einem der Ansprüche 1 bis 3,
**dadurch gekennzeichnet, dass** es einen Anteil von nicht reagiertem Wasser von 25 bis 49 Gew.-%, bezogen auf die Gesamtmasse, enthält.

5. Polyurethan nach einem der Ansprüche 1 bis 4,
**dadurch gekennzeichnet, dass** es eine Raumdichte von 0,03 bis 0,3 g/cm³ aufweist.

6. Polyurethan nach einem der Ansprüche 1 bis 5,
**dadurch gekennzeichnet, dass** es schwer entflammbar oder unbrennbar, bestimmt durch eine Labormethode mit einer siebenminütigen Direktbeflammung bei 700 bis 750°C ist.

7. Polyurethan nach einem der Ansprüche 1 bis 6,
**dadurch gekennzeichnet, dass** die Komponente A über die Stufe eines Konzentrats hergestellt wird, das Wasser in einem Anteil von 25 bis 50 Gew.-%, bezogen auf die Gesamtwassermenge der Komponente A, ein organisches Quellmittel, ein Mittel zur Verhinderung des Schrumpfens, ausgewählt aus der Gruppe bestehend aus Alkylsilanen, Aminosiloxanemulsionen und Calciumsulfoaluminaten, wie sie durch Hitzebehandlung aus Calciumoxid, Aluminiumoxid und Calciumsulfat gewonnen werden, und gegebenenfalls weitere organische oder anorganische Zusatzstoffe enthält.

8. Polyurethan nach einem der Ansprüche 1 bis 7,
**dadurch gekennzeichnet, dass** die Komponente B über die Stufe eines Konzentrats hergestellt wird, das eine oder mehrere Hydroxyverbindungen, ein oder mehrere Polyisocyanate und/oder deren Reaktionsprodukt, einen Weichmacher in bis zu 50 Gew.-% der Gesamtmenge der zur Herstellung des Polyurethans benötigten Menge und gegebenenfalls weitere organische oder anorganische Zusatzstoffe enthält.

9. Polyurethan-Verbundmaterial, enthaltend ein hoch wasserhaltiges Polyurethan nach einem der Ansprüche 1 bis 8 im Verbund mit einem im Wesentlichen wasserfreien Polyurethan.

10. Verfahren zur Herstellung eines Polyurethans nach einem der Ansprüche 1 bis 8, umfassend die Reaktion einer Komponente A und einer Komponente B, gegebenenfalls in Anwesenheit eines Treibmittels, wobei die Komponente A Wasser in einem Anteil von mindestens 50 Gew.-%, ein organisches Quellmittel, ein Mittel zur Verhinderung des Schrumpfens, ausgewählt aus der Gruppe bestehend aus Alkylsilanen, Aminosiloxanemulsionen und Calciumsulfoaluminaten, wie sie durch Hitzebehandlung aus Calciumoxid, Aluminiumoxid und Calciumsulfat gewonnen werden, und gegebenenfalls weitere organische oder anorganische Zusatzstoffe enthält, und
wobei die Komponente B eine oder mehrere Polyhydroxyverbindungen, ein oder mehrere Polyisocyanate und/oder deren Reaktionsprodukt, einen Weichmacher und gegebenenfalls weitere organische oder anorganische Zusatzstoffe enthält, wobei der Weichmacher zu mehr als 40 Gew.-%, bezogen auf das Gesamtgewicht der Weichmacher, aus nachwachsenden Rohstoffen besteht,
wobei die Komponente A gegebenenfalls über die Zwischenstufe eines Konzentrats mit reduziertem Wasseranteil hergestellt wird, die Komponente B gegebenenfalls über die Zwischenstufe eines Konzentrats mit reduziertem Weichmacheranteil hergestellt wird, beide Komponenten gegebenenfalls in Anwesenheit eines Treibmittels zur Reaktion gebracht werden und das resultierende, hoch wasserhaltige Endprodukt gegebenenfalls zusätzlich mit einem im Wesentlichen wasserfreien Polyurethan in einen Verbundstoff überführt wird.

## Claims

1. Compact or cellular polyurethane with a high water content, obtainable by a reaction of a component A and a component B, optionally in the presence of an expanding agent,
component A comprising water of at least 50% by weight, an organic swelling agent, an agent for preventing shrinkage selected from the group consisting of alkylsilanes, aminosiloxane emulsions and calcium sulphoaluminates available by heating a mixture of calcium oxide, aluminium oxide and calcium sulphate and optionally further organic and inorganic additives
and
component B comprising one or more polyhydroxyl compounds, one ore more polyisocyanates and / or the reaction product thereof, a plasticiser comprising more than 40% by weight, based on the total weight of plasticisers, products based on renewable raw materials and optionally further organic and inorgan ic additives.

2. Polyurethane according to claim1,
wherein the organic swelling agent is selected of the class of acrylate polymers

3. Polyurethane according to one of the claims 1 or 2
wherein the plasticisers are selected at least partially from natural oils, in particular vegetable oils and the esterification products thereof.

4. Polyurethane according to one of the claims 1 to 3,
wherein the polyurethane comprises a proportion of non-reacted water of 25 to 49% by weight, based on total mass.

5. Polyurethane according to one of the claims 1 to 4,
**characterised in that** it has a volumetric density of 0,03 to 0,3 g/cm³.

6. Polyurethane according to one of the claims 1 to 5;
wherein the polyurethane is flame-resistant or non-flammable, determined by a laboratory method with a seven-minute direct flame treatment at 700 to 750°C.

7. Polyurethane according to one of the claims 1 to 6,
wherein the component A being produced via the intermediate step of a concentrate, comprising water in a proportion of 25 to 50% by weight, based on the total quantity of water in component A,
comprising an organic swelling agent, an agent for preventing shrinkage, selected from the group consisting of alkylsilanes, aminosiloxane emulsions and calcium sulphoaluminates available by heating a mixture of calcium oxide, aluminium oxide and calcium sulphate and optionally further organic and inorganic additives.

8. Polyurethane according to one of the claims 1 to 7,
wherein the component B is produced via the intermediate step of a concentrate, comprising one or more hydroxyl compounds, one or more polyisocyanates and/ or the reaction products thereof, a plasticiser in up to 50% by weight of the total quantity of plasticisers in component B and optionally further organic and inorganic additives.

9. Polyurethane composite material, containing a polyurethane with a high water content according to one of the claims 1 to 8, in a composite with an essentially water-free polyurethane.

10. Method for the production of a polyurethane according to one of the claims 1 to 8 comprising the reaction of a component A and a component B, optionally in the presence of an expanding agent,
component A comprising water in a proportion of at least 50% by weight, an organic swelling agent, an agent for preventing shrinkage selected from the group consisting of alkylsilanes, aminosiloxane emulsions and calcium sulphoaluminates available by heating a mixture of calcium oxide, aluminium oxide and calcium sulphate and optionally further organic and inorganic additives and a component B comprising one or more polyhydroxyl compounds, one or more polyisocyanates and or the reaction product thereof, a plasticiser and optionally further organic and inorganic additives, the plasticiser comprising more than 40% by weight, based on the total weight of the plasticisers, products based on renewable raw materials,
in which the component A being produced optionally via the intermediate step of a concentrate with a reduced water proportion,
the component B being produced optionally via the intermediate step of a concentrate with a reduced plasticiser proportion,
both components being reacted optionally in the presence of an expanding agent and the resulting end product with a high water content being converted into a composite material optionally in addition with a substantially water-free polyurethane.

## Revendications

1. Polyuréthane compact ou alvéolaire, à haute teneur en eau, résultant de la réaction d'un composant A avec un composant B, le cas échéant en présence d'un agent propulseur, en considérant que le composant A est composé d'au moins 50 % en poids d'eau, d'un agent gonflant organique, d'un agent évitant le rétrécissement, choisi parmi le groupe comprenant les alkylsilanes, les émulsions amino siloxanes et les sulfo-aluminates de calcium comme ils sont obtenus par traitement thermique de l'oxyde de calcium, l'oxyde d'aluminium et le sulfate de calcium, et éventuellement d'autres additifs organiques ou anorganiques et
en considérant que le composant B comprend des composés poly-hydroxylés, un ou plusieurs poly-isocyanates et/ou leur produit de réaction, un plastifiant et éventuellement d'autres additifs organiques ou anorganiques, en considérant que le plastifiant est composé de plus de 40 % de poids de matières premières renouvelables par rapport au poids total des plastifiants.

2. Polyuréthane selon la revendication 1,
**caractérisé par le fait que** l'agent gonflant organique est choisi entre des polymères de base acrylique.

3. Polyuréthane selon une des revendications 1 ou 2,
**caractérisé par le fait que** les agents plastifiants sont au moins en partie choisis parmi des huiles natives, en particulier des huiles végétales et de leurs produits d'estérification.

4. Polyuréthane selon une des revendications 1 à 3,
**caractérisé par le fait qu'**il contient une partie d'eau non réactive de 25 à 49 % de poids par rapport à la masse totale.

5. Polyuréthane selon une des revendications 1 à 4,
**caractérisé par le fait qu'**il a un poids spécifique de 0,03 à 0,3 g/cm³.

6. Polyuréthane selon une des revendications 1 à 5,
**caractérisé par le fait qu'**il est difficilement inflammable ou ininflammable, ceci prouvé par une méthode en laboratoire par flambage direct de 7 minutes sous 700 à 750°C.

7. Polyuréthane selon une des revendications 1 à 6,
**caractérisé par le fait que** le composant A est fabriqué par l'intermédiaire d'un concentré comprenant de l'eau dans une partie de 25 à 50 % de poids par rapport à la quantité totale d'eau du composant A, un agent gonflant organique, un agent évitant le rétrécissement choisi parmi le groupe comprenant des alkylsilanes, des émulsions amino siloxanes et des sulfo-aluminates de calcium, comme ils le sont obtenus par le traitement thermique de l'oxyde de calcium, l'oxyde d'aluminium et le sulfate de calcium, et éventuellement d'autres additifs organiques ou anorganiques.

8. Polyuréthane selon une des revendications 1 à 7,
**caractérisé par le fait que** le composant B est fabriqué par l'intermédiaire d'un concentré lequel contient un ou plusieurs composés hydroxylés, un ou plusieurs poly-isocyanates et un/ou leur produit de réaction, un agent plastifiant de jusqu'à 50 % de poids sur la quantité totale de la quantité nécessaire à la production de polyuréthane et éventuellement d'autres additifs organiques ou anorganiques.

9. Matière composite polyuréthane, comprenant un polyuréthane d'une haute teneur en eau suivant les revendications 1 à 8 avec un polyuréthane essentiellement anhydre.

10. Procédé pour la production d'un polyuréthane selon une des revendications 1 à 8, comprenant la réaction d'un composant A et d'un composant B, éventuellement en présence d'un agent propulseur, en considérant que le composant A contient une partie d'au moins 50% de poids d'eau, un agent gonflant organique, un agent évitant le rétrécissement choisi parmi le groupe comprenant des alkylsilanes, des émulsions amino siloxanes et les sulfo-aluminates de calcium comme ils sont obtenus par le traitement thermique d'oxyde de calcium, d'oxyde d'aluminium et de sulfate de calcium, et le cas échéant d'autres additifs organiques ou anorganiques et en considérant que le composant B comprend un ou plusieurs composés poly-hydroxylés, un ou plusieurs poly-isocyanates et/ou leur produit de réaction, d'un plastifiant et éventuellement d'autres additifs organiques ou anorganiques, en considérant que le plastifiant est composé de plus de 40 % de poids de matières premières renouvelables par rapport au poids total des plastifiants en considérant que le composant A est fabriqué éventuellement par l'intermédiaire d'un concentré avec une partie d'eau réduite, que le composant B est fabriqué éventuellement par l'intermédiaire d'un concentré avec une partie réduite de plastifiants, que les deux composants sont amenés à réaction éventuellement en présence d'un agent propulseur et que le produit fini à haute teneur en eau en résultant est transféré, éventuellement avec un polyuréthane essentiellement anhydre, en un matériau composite.
